(19) **Europäisches Patentamt / European Patent Office / Office européen des brevets**

(11) **EP 4 511 628 B1**

(12) **FASCICULE DE BREVET EUROPEEN**

(45) Date de publication et mention de la délivrance du brevet:
**24.12.2025 Bulletin 2025/52**

(21) Numéro de dépôt: **23725388.5**

(22) Date de dépôt: **20.04.2023**

(51) Classification Internationale des Brevets (IPC):
**G01M 15/12** *(2006.01)*   **G01M 15/14** *(2006.01)*
**G01M 13/045** *(2019.01)*   **G01H 1/00** *(2006.01)*

(52) Classification Coopérative des Brevets (CPC):
**G01M 13/045; G01H 1/003; G01M 15/12; G01M 15/14**

(86) Numéro de dépôt international:
**PCT/FR2023/050572**

(87) Numéro de publication internationale:
**WO 2023/203304 (26.10.2023 Gazette 2023/43)**

(54) **MÉTHODE DE SURVEILLANCE D'UNE MACHINE TOURNANTE POUR LA DÉTECTION D'UN DÉFAUT D'UN ROULEMENT D'AÉRONEFS**

VERFAHREN ZUR ÜBERWACHUNG EINER ROTIERENDEN MASCHINE ZUR ERKENNUNG EINES FEHLERS IN EINEM FLUGZEUGLAGER

METHOD OF MONITORING A ROTATING MACHINE FOR THE DETECTION OF A DEFECT IN AN AIRCRAFT BEARING

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **22.04.2022 FR 2203779**

(43) Date de publication de la demande:
**26.02.2025 Bulletin 2025/09**

(73) Titulaires:
• **SAFRAN**
**75015 Paris (FR)**
• **SAFRAN AIRCRAFT ENGINES**
**75015 Paris (FR)**

(72) Inventeurs:
• **ABBOUD, Dany**
**77550 MOISSY-CRAMAYEL (FR)**
• **GRIFFATON, Julien Christian Pascal**
**77550 MOISSY-CRAMAYEL (FR)**
• **EL BADAOUI, Mohammed**
**77550 MOISSY-CRAMAYEL (FR)**
• **GOMEZ CHIRINOS, José-Luis**
**77550 MOISSY-CRAMAYEL (FR)**
• **COURRECH-NIELSEN, Christian**
**77550 MOISSY-CRAMAYEL (FR)**

(74) Mandataire: **Cabinet Camus Lebkiri**
**25 rue de Maubeuge**
**75009 Paris (FR)**

(56) Documents cités:
**US-A1- 2012 272 736    US-A1- 2021 063 276**

• **WANG YI ET AL: "Order spectrogram visualization for rolling bearing fault detection under speed variation conditions", MECHANICAL SYSTEMS AND SIGNAL PROCESSING, vol. 122, 31 December 2018 (2018-12-31), pages 580 - 596, XP085582138, ISSN: 0888-3270, DOI: 10.1016/ J.YMSSP.2018.12.037**
• **PHAM MINH TUAN ET AL: "Accurate Bearing Fault Diagnosis under Variable Shaft Speed using Convolutional Neural Networks and Vibration Spectrogram", APPLIED SCIENCES, vol. 10, no. 18, 13 September 2020 (2020-09-13), pages 6385, XP093003751, DOI: 10.3390/ app10186385**

**(Cont. page suivante)**

- **ARUN P ET AL: "A Method for the Investigation of Bearing Vibration Based on Spectrogram Image Comparison", vol. 396, 29 August 2018 (2018-08-29), pages 012044, XP093003748, Retrieved from the Internet <URL:https://iopscience.iop.org/article/10.1088/1757-899X/396/1/012044> [retrieved on 20221130], DOI: 10.1088/1757-899X/396/1/012044**

**Description**

**DOMAINE TECHNIQUE DE L'INVENTION**

Le domaine technique de l'invention est celui de la surveillance de machine tournante et plus particulièrement des roulements de moteurs d'aéronefs par analyse de signaux vibratoires, et la transmission de puissance des moteurs.
La présente invention concerne une méthode de surveillance d'une machine tournante pour la détection d'un défaut d'un roulement.

**ARRIERE-PLAN TECHNOLOGIQUE DE L'INVENTION**

La surveillance des roulements d'aéronefs est primordiale pour l'industrie du transport et, particulièrement, aéronautique. En effet, les roulements font partie des organes mécaniques les plus sollicités et les plus critiques sur de nombreux équipements (compresseurs, turboréacteurs, réducteurs...). Ces composants mécaniques ont donc une probabilité d'endommagement élevée, pouvant causer des dégâts dans le moteur d'aéronef allant jusqu'à sa défaillance totale. Sans compter le coût économique, de telles défaillance peuvent mettre en jeu la sûreté des équipements et des usagers.
Une maintenance prédictive par la surveillance continue de l'état de santé des roulements permettrait de détecter et d'identifier un éventuel défaut sur un des roulements, afin de prévenir son endommagement et/ou sa défaillance. Le remplacement du roulement serait donc conditionné par le résultat d'une analyse au moyen d'un système permettant une telle surveillance.
Il existe un certain nombre de méthodes destinées à la surveillance de machines tournantes, notamment au moyen de mesures des vibrations induites par le fonctionnement de la machine et des éléments entrainés. Cependant, les méthodes connues de l'état de l'art dans le domaine sont difficilement applicables à des engins aéronautiques, en particulier les moteurs d'avions et d'hélicoptères. En effet, la surveillance du fonctionnement des moteurs d'aéronefs est rendue difficile, d'une part, par l'accessibilité et l'encombrement des lignes d'arbres et moteurs tournants dans des environnement critiques qui entravent l'installation de systèmes de surveillance qui doivent alors utiliser peu de capteurs et/ou placer les capteurs à distance des roulements surveillés et, d'autre part, par le fait que les régimes moteur de ces machines tournantes sont à de très hautes vitesses, ce qui modifie fortement la nature statistique des signaux vibratoires, comparativement à un régime basse vitesse.
En particulier, les roulements dans un aéronef sont amenés à tourner à des vitesses très élevées, du même ordre que la fréquence de résonnance du système. Ce mode de fonctionnement change significativement la nature statistique des sources vibratoires et rend les signaux vibratoires, mesurés in situ, très différents de ceux obtenus lors d'une phase de test, par exemple sur un banc d'essai commercial. Par exemple, à haut régime, les chevauchements des ondes transitoires générées par les chocs réduisent l'impulsivité de la composante du défaut, ce qui n'est pas compatible avec une grande partie des méthodes de l'état de l'art qui sont principalement basées sur la nature impulsive des signaux.
Une autre difficulté, propre au fonctionnement des aéronefs, est la présence de régimes transitoires, c'est-à-dire des changements significatifs de régime vitesse, avec des phases de très fortes accélérations ou décélérations souvent brusques. On parle également de régimes non-stationnaires. A ces vitesses fortement variables s'ajoutent des variations de charges radiales et/ou axiales des différents éléments du moteur. Les méthodes de l'état de l'art ne permettent cependant pas de prendre en compte de tels modes de fonctionnement transitoires. Pourtant, ne pas prendre en compte ces régimes non stationnaires peut s'avérer pénalisant. D'une part, il n'est pas garanti que l'enregistrement en régime stationnaire soit suffisamment long pour permettre une analyse ; d'autre part, les signatures vibratoires de certains défauts de roulement sont susceptibles d'émerger plus aisément à certains régimes que d'autres, et le balayage de plusieurs régimes pourrait donc améliorer la probabilité de détection des signaux faibles.
A ceci s'ajoute des contraintes de surveillance directement liées à la complexité des moteurs. En l'occurrence, les assemblages des turbomachines sont tels qu'un très grand nombre de signatures vibratoires est enregistré dans les signaux, chacune étant associée à un des éléments du moteur, par exemple un engrenage, un roulement, un ventilateur, une aube, un arbre, un compresseur, etc. Même en fonctionnement normal, ces éléments produisent des vibrations importantes qui masquent les composantes vibratoires produites par un roulement défectueux et ajoutent du bruit. Les méthodes classiques d'analyse vibratoire sont donc peu fiables car une séparation des sources n'est pas triviale à mettre en œuvre pour ce genre d'application, et notamment en cas de non-stationnarité du signal.
En plus des éléments tournants de la turbomachine, d'autres sources vibratoires, appelées sources asynchrones, rendent l'identification d'un roulement défectueux d'autant plus difficile qu'elles ajoutent des composantes fortement non-stationnaires dans les signaux.
Une partie des sources asynchrones est directement liée à la conception du moteur. En effet, les turbomachines comportent en général deux arbres de rotation, non rigidement liés, ayant tous deux une vitesse de rotation différente avec des modes de fonctionnement asynchrones durant les phases stationnaires de régime moteur, ainsi que durant les phases d'accélération et de décélération. On parle dans ce cas des vitesses de rotation N1 et N2 des arbres ; ceci est également le cas pour des aéronefs bimoteurs. Ces modes de fonctionnement asynchrones peuvent eux aussi générer un contenu harmonique supplémentaire qui pénalise la discrimination des multiples fréquences associées aux fonctionnement des différents éléments tournants du moteur dans le spectre des signaux. En effet, certaines composantes harmoniques vont se superposer ou se masquer les unes les autres, ce qui entraînera une mauvaise estimation de l'état de fonctionnement du moteur. Par ailleurs, du fait de la variabilité des régimes moteurs, il est de difficile de détecter un roulement défaillant car la signature harmonique associée à ce roulement sera également fortement variable. En outre, la variabilité des régimes moteurs influe également sur la variabilité de la nature statistique du signal vibratoire.

En plus des éléments tournants des moteurs, d'autres sources asynchrones viennent bruiter le signal vibratoire par la présence de composantes fortement non-stationnaires. En effet, lorsque le moteur d'un aéronef est en fonctionnement, de nombreuses sources de bruit asynchrones apparaissent, qui sont aussi bien d'origine solidienne, aérienne, électromagnétique ou thermique. Les sources de bruit principales sont la combustion du carburant pour mouvoir l'aéronef, l'écoulement aérodynamique des fluides dans le moteur et autour de l'appareil (par exemple, flottements et turbulences), ainsi que les résonnances des différents éléments du moteur et de l'aéronef par les vibrations générées par le moteur. Ces multiples sources de bruit, majoritairement large bande, font que les niveaux de rapport signal à bruit dans les signaux vibratoires acquis sont faibles et qu'il est difficile d'y différencier la signature vibratoire d'un roulement défectueux du bruit.

L'élimination ou la séparation des différentes sources de bruit précédemment citées n'est pas évidente à réaliser par la mise en œuvre des méthodes de l'état de l'art en raison des propriétés statistiques singulières et complexes des signaux vibratoires des machines tournantes. A titre d'exemple, les interférences aérodynamiques sont connues pour avoir une signature spectrale large bande et aléatoire, tandis que la signature des fans/aubes est plutôt cyclique, alors que les arbres et les engrenages sont des composantes sinusoïdales dont les phases dépendent des positions des arbres sur lesquels ils sont montés.

On connait de l'état de l'art des méthodes de surveillance basées sur l'analyse avancée de signaux temporels et de spectrogrammes (par exemple, FR2952177B1, FR3076348B1 et EP2496921A1). Toutefois, ces méthodes ne permettent pas de répondre aux problématiques posées par des applications aéronautiques. C'est-à-dire que ces méthodes ne sont pas ou peu robustes aux régimes de fonctionnement non-stationnaire des turbomachines ; elles ne permettent pas non plus de tenir compte de la structure statistique particulière des signaux vibratoires causée par des vitesses de rotations élevées ; et elles sont difficilement applicables à des signaux fortement bruités par des sources d'origines asynchrone, produisant un faible niveau de rapport signal à bruit. Un autre document de l'art antérieur pertinent pour l'invention est le document de brevet US 2012/272736 A1, qui concerne la surveillance de l'usure des moteurs, en particulier l'usure des roulements à rouleaux supportant en rotation au moins un arbre rotatif du moteur.

Il existe donc un besoin de trouver un moyen de surveillance d'une machine tournante qui soit robuste avec le régime de fonctionnement haute vitesse et non-stationnaire de la machine, pour détecter un défaut d'un roulement, dans un environnement complexe fortement bruité.

## RESUME DE L'INVENTION

L'invention offre une solution aux problèmes évoqués précédemment, en permettant la surveillance, grâce à la mesure d'un signal vibratoire, d'une machine tournante opérant à hautes vitesses, de sorte que la signature vibratoire d'un roulement défectueux soit discriminée des signatures vibratoires des autres éléments et du bruit engendrés par le fonctionnement de la machine, tout en tenant compte des régimes transitoires du moteur.

Un premier aspect de l'invention concerne une méthode de surveillance d'une machine tournante pour la détection d'un défaut d'un roulement, la méthode comprenant les étapes suivantes :

- Acquisition d'un signal vibratoire de la machine tournante mesuré par un capteur de vibrations ;
- Détermination d'un spectrogramme d'ordre 1 par analyse cyclostationnaire à l'ordre 1 du signal vibratoire au moyen d'une transformée delta et d'une standardisation spectrale ;
- Détermination d'un spectrogramme d'ordre 2 par analyse cyclostationnaire à l'ordre 2 du signal vibratoire au moyen d'une cohérence cyclique moyennée, d'une transformée delta et d'une standardisation spectrale ;
- Détection d'une signature vibratoire du défaut de roulement à partir du spectrogramme d'ordre 1 et du spectrogramme d'ordre 2.

On entend par « machine tournante » un engin motorisé dont le moteur transforme l'énergie apportée au moteur en un mouvement rotatif, par exemple au travers d'une ligne d'arbre. Dans le contexte de l'invention, il s'agit notamment d'aéronefs tels des avions ou hélicoptères, mais il peut également s'agir de moteur d'éoliennes, de moteurs de véhicules roulants, etc.

On entend par « capteur de vibration » un capteur adapté pour mesurer les vibrations auxquelles une structure est soumise. Il peut, par exemple, s'agir d'un capteur de type accéléromètre, basé sur l'effet piézoélectrique, d'un vibromètre laser, d'un capteur de déplacement capacitif ou à courants de Foucault, etc.

On entend par « signal cyclostationnaire » un signal dont les propriétés statistiques varient périodiquement avec le temps, par opposition à un signal stationnaire dont les propriétés statistiques sont invariantes dans le temps. C'est en particulier le cas pour les signatures vibratoires des éléments rotatifs d'une ligne d'arbre, dont le contenu harmonique est dépendant du régime de fonctionnement du moteur. En particulier, les propriétés statistiques de telles signatures seront invariantes par cycles de rotation, un cycle étant une ou plusieurs périodes de rotation de l'arbre, tandis que les cycles de rotation auront une variabilité qui suivra la non-stationnarité des régimes moteurs. Ainsi, on entend par « analyse cyclostationnaire » une analyse d'un signal dont les propriétés statistiques varient périodiquement avec le temps.

Grâce à l'invention, il est possible de détecter un roulement défaillant dans la machine tournante à partir de l'analyse d'un signal vibratoire fortement bruité, acquis sur la machine. L'analyse est ici réalisée par l'étude conjointe des propriétés déterministes, également appelées propriétés périodiques, et cyclostationnaires de la signature harmonique du défaut. La méthode est donc particulièrement adaptée à des applications hautes vitesses telles que les moteurs d'hélicoptères, d'avions ou de drones, par exemple pour surveiller un boitier d'entraînement des accessoires (ou AGB, pour « Accessory Gearbox » en anglais), des supports d'équipements, des systèmes de transmission d'un moteur à l'avion, etc. La méthode peut également être appliquée à d'autres types de machines tournantes telles que les essieux de voitures, de camions ou de train, ou encore à des équipements tels des boîtiers d'engrenages, des alternateurs, des pompes, des roues de trains d'atterrissage d'avion, etc.

La méthode est aisément praticable dans le cadre d'une application aéronautique puisqu'elle ne requiert, a minima, qu'un seul capteur de vibrations, dont les dimensions sont compatibles avec les problématiques d'encombrement et de compacité des systèmes aéronautiques. L'installation de peu de matériel est donc suffisante pour que la méthode selon l'invention soit opérationnelle et réduit le coût de la surveillance. En outre, les capteurs de vibrations étant plus robustes aux environnements critiques et plus sensibles aux hautes fréquences que des capteurs de vitesse ou de position, la méthode est adaptée à une application aéronautique.

L'utilisation d'une transformée delta pour former le spectrogramme d'ordre 1 et le spectrogramme d'ordre 2 permet de supprimer les sources qui interfèrent avec la signature vibratoire du roulement défectueux. A titre d'exemple, la transformée delta peut se baser sur la connaissance de la cinématique des arbres du moteur pour éliminer systématiquement ces composants fréquentiels.

On entend par « standardisation spectrale » une opération qui rend le spectre de moyenne nulle et d'écart-type unitaire. Grâce à l'utilisation de la standardisation spectrale, il est possible de faire une réduction statistique du spectrogramme d'ordre 1. En effet, la standardisation spectrale a pour effet de réduire et uniformiser les propriétés spectrales du spectrogramme. En outre, la standardisation spectrale permet implicitement de blanchir le spectrogramme du signal, ce qui améliore le rapport signal à bruit et compense le contenu harmonique associé aux modes de vibration et résonnances des éléments du moteur.

Ces divers outils utilisés dans l'invention permettent donc d'améliorer la robustesse de la détection de la signature vibratoire d'un roulement défectueux par rapport aux bruits contenus dans le signal vibratoire. En conséquence, la détection d'un défaut de roulement peut être réalisée de façon précoce, lors de l'apparition des tous premiers symptômes, et permet ainsi d'éviter une défaillance de la turbomachine.

Ainsi, la méthode selon l'invention fournit un moyen d'assistance, par exemple à un expert ou un opérateur, pour permettre l'établissement d'un diagnostic fiable de l'état de santé des roulements d'un aéronef, grâce à l'émergence de signatures harmoniques représentatives de défauts de roulements.

Outre les caractéristiques qui viennent d'être évoquées dans le paragraphe précédent, la méthode selon le premier aspect de l'invention peut présenter une ou plusieurs caractéristiques complémentaires parmi les suivantes, considérées individuellement ou selon toutes les combinaisons techniquement possibles.

Dans un mode de réalisation, l'étape de détection de la signature vibratoire du défaut de roulement défectueux comprend une identification du roulement défectueux à partir de ladite signature vibratoire.

Grâce à ce mode de réalisation, il est possible de faciliter le diagnostic de l'état de santé, par un expert ou un opérateur, du roulement défectueux et de la machine tournante.

Dans un mode de réalisation, la méthode de surveillance selon le mode de réalisation précédent, comprenant en outre une étape de maintenance du roulement défectueux identifié.

Grâce à ce mode de réalisation, il est possible de déclencher une opération de maintenance pour effectuer une réparation ou changer le roulement défectueux identifié, afin de prolonger la durée de vie de la machine tournante et de prévenir une défaillance de la machine tournante.

Dans un mode de réalisation, le signal vibratoire est acquis sur une pluralité de phases de fonctionnement différentes de la machine tournante.

L'intérêt d'effectuer l'analyse du signal vibratoire suivant des phases de fonctionnement différentes de la machine tournante est de garantir la diversité des signatures vibratoires acquises et de s'assurer que, si la machine tournante comporte un roulement défectueux, sa signature vibratoire sera effectivement comprise dans le signal. En effet, la signature est susceptible de n'apparaitre qu'à des régimes moteurs spécifiques. Ainsi, la surveillance couvre la majorité de la marge opérationnelle de l'aéronef et augmente la probabilité de détection d'un défaut de roulement parmi le contenu fréquentiel riche du signal.

Dans un mode de réalisation, le spectrogramme d'ordre 1 et le spectrogramme d'ordre 2 sont déterminés à partir d'une Transformée de Fourier appliquée au signal vibratoire sur une pluralité de fenêtres temporelles successives dont une durée est comprise entre 0,1 s et 10 s.

Grâce à l'analyse du signal vibratoire suivant des fenêtres temporelles de petite taille, il est possible de considérer que les propriétés statistiques du signal vibratoire, variant en fonction des différents régimes du régime moteur, sont stationnaires sur la durée de la fenêtre temporelle. L'analyse du signal vibratoire garantit ainsi que la variabilité des régimes de fonctionnement de la machine tournante est prise en compte. Ce mode de réalisation permet également de faciliter la détection des signatures vibratoires de défauts de roulements en suivant les déviations des fréquences caractéristiques du roulement.

Dans un mode de réalisation, l'étape d'acquisition comprend en outre l'acquisition d'un signal de vitesse de la machine tournante mesuré au moyen d'un capteur de vitesse.

La mesure d'un signal de vitesse permet d'avoir une référence de vitesse à tout instant de mesure. Ce signal de vitesse peut, en l'occurrence, être utilisé pour rééchantillonner le signal vibratoire suivant les cycles de fonctionnement de la machine. Le signal de vitesse permet donc de recaler le signal vibratoire sur la vitesse de rotation du moteur. En d'autres termes, le signal de vibration permet d'identifier les cycles de fonctionnement de la machine dans le signal vibratoire.

Dans un mode de réalisation, la méthode comprend en outre, à l'étape de détermination du spectrogramme d'ordre 1, les étapes suivantes :

- Pour chaque fenêtre temporelle de la pluralité de fenêtres temporelles :

  ◦ Rééchantillonnage du signal vibratoire à partir du signal de vitesse pour obtenir un signal angulaire ;
  ◦ Détermination d'un spectre d'ordre 1 par application d'une Transformée de Fourier appliquée au signal angulaire ;
  ◦ Détermination d'un spectre d'ordre 1 corrigé par application d'une Transformée Delta au spectre d'ordre 1 ;
  ◦ Détermination d'un spectre d'ordre 1 standardisé par application d'une standardisation spectrale au spectre d'ordre 1 corrigé ;
  ◦ Détermination d'un spectre d'ordre 1 aplati par application d'une autocorrélation spectrale au spectre d'ordre 1 standardisé ;

- Concaténation des spectres d'ordre 1 aplatis, déterminés pour chaque fenêtre temporelle, pour former le spectrogramme d'ordre 1.

Dans un mode de réalisation, la méthode comprend en outre, à l'étape de détermination du spectrogramme d'ordre 1, les étapes suivantes :

- Pour chaque fenêtre temporelle de la pluralité de fenêtres temporelles :

  ◦ Détermination d'un spectre d'ordre 1 aplati corrigé par application d'une Transformée Delta au spectre d'ordre 1 aplati ;
  ◦ Détermination d'un spectre d'ordre 1 réduit par application d'une standardisation spectrale au spectre d'ordre 1 aplati corrigé ;

l'étape de concaténation étant la concaténation des spectres d'ordre 1 réduit, déterminés pour chaque fenêtre temporelle, pour former le spectrogramme d'ordre 1.

Dans un mode de réalisation, la méthode comprend en outre, à l'étape de détermination du spectrogramme d'ordre 2, les étapes suivantes :

- Pour chaque fenêtre temporelle de la pluralité de fenêtres temporelles ;

  ◦ Rééchantillonnage du signal vibratoire à partir du signal de vitesse pour obtenir un signal angulaire ;
  ◦ Suppression de la partie déterministe du signal angulaire pour obtenir un signal vibratoire corrigé ;
  ◦ Détermination d'un spectre d'ordre 2 à partir d'une cohérence cyclique du signal vibratoire corrigé ;
  ◦ Moyennage du spectre d'ordre 2 ;
  ◦ Détermination d'un spectre d'ordre 2 aplati par application d'une autocorrélation spectrale au spectre d'ordre 2 moyenné ;

- Concaténation des spectres d'ordre 2 aplatis, déterminés pour chaque fenêtre temporelle, pour former le spectrogramme d'ordre 2.

Dans un mode de réalisation, la méthode comprend en outre, à l'étape de détermination du spectrogramme d'ordre 2, les étapes suivantes :

- Pour chaque fenêtre temporelle de la pluralité de fenêtres temporelles :

  ◦ Détermination d'un spectre d'ordre 2 aplati corrigé par application d'une Transformée Delta au spectre d'ordre 2 aplati ;
  ◦ Détermination du spectre d'ordre 2 réduit par application d'une standardisation spectrale au spectre d'ordre 2 aplati corrigé ;

l'étape de concaténation étant la concaténation des spectres d'ordre 2 réduits, déterminés pour chaque fenêtre temporelle, pour former le spectrogramme d'ordre 2.

Grâce à l'application d'une autocorrélation, il est possible de faire émerger la signature vibratoire du roulement défectueux dans les spectrogrammes d'ordres 1 et 2, ce qui permet d'améliorer la détection de la signature vibratoire en question.

Un deuxième aspect de l'invention concerne un système de surveillance d'une machine tournante pour la détection d'un défaut d'un roulement, le système comprenant :

- Un module d'acquisition comprenant :

  ◦ Le capteur de vibration ;
  ◦ Une mémoire ; et
  ◦ Un processeur ;

- Un module de traitement 30 comprenant :

  ◦ Une mémoire ; et
  ◦ Un processeur ;

- Un moyen de connexion entre le module d'acquisition et le module de traitement.

Un troisième aspect de l'invention concerne un produit-programme d'ordinateur comprenant des instructions qui, quand le programme est exécuté sur un ordinateur, conduisent celui-ci à mettre en œuvre les étapes de la méthode selon le premier aspect de l'invention.

Un dernier aspect de l'invention concerne un support d'enregistrement lisible par ordinateur comprenant des instructions qui, lorsqu'elles sont exécutées par un ordinateur, conduisent celui-ci à mettre en œuvre les étapes de la méthode selon le premier aspect de l'invention.

L'invention et ses différentes applications seront mieux comprises à la lecture de la description qui suit et à l'examen des figures qui l'accompagnent.

**BREVE DESCRIPTION DES FIGURES**

Les figures sont présentées à titre indicatif et nullement limitatif de l'invention.

- La figure 1 est un schéma synoptique illustrant l'enchaînement des étapes de la méthode selon l'invention.
- La figure 2 est une illustration d'une analyse d'un signal vibratoire et d'un signal de vitesse par fenêtre temporelle glissante.
- La figure 3 est un spectre d'un signal vibratoire acquis sur une machine tournante et un spectre théorique de la cinématique de la machine tournante.
- La figure 4 est une comparaison entre un spectre par Transformée de Fourier et un spectre par Transformée Delta à partir d'un même signal vibratoire.
- La figure 5 est une illustration de l'effet de l'application d'une standardisation spectrale sur un spectre.
- La figure 6 est une illustration de l'effet de l'application d'une autocorrélation spectrale sur un spectre.
- La figure 7 est une comparaison des spectres successivement traités lors d'une étape de la méthode décrite à la figure 1.

- La figure 8 est une comparaison entre un spectre d'un signal vibratoire avant et après traitement selon une étape de la méthode de la figure 1.
- La figure 9 présente une cohérence cyclique de la partie aléatoire du signal vibratoire.
- La figure 10 représente le spectre de la cohérence cyclique de la figure 9 moyennée selon la dimension temporelle.
- La figure 11 est un exemple de spectrogramme d'ordre 1 déterminé par la méthode décrite à la figure 1.
- La figure 12 est un exemple de spectrogramme d'ordre 2 déterminé par la méthode décrite à la figure 1.
- La figure 13 est le spectre issu du moyennage, selon la dimension temporelle, du spectrogramme d'ordre 1.
- La figure 14 est le spectre issu du moyennage, selon la dimension temporelle, du spectrogramme d'ordre 2.
- La figure 15 est un schéma illustrant un système pour mettre en œuvre la méthode décrite à la figure 1.

## DESCRIPTION DETAILLEE

Sauf précision contraire, un même élément apparaissant sur des figures différentes présente une référence unique.

La présente invention concerne une méthode de surveillance d'un roulement défectueux d'une machine tournante par analyse vibratoire, par exemple un roulement d'un arbre d'un moteur d'un aéronef. La méthode requiert en entrée un signal vibratoire acquis sur la machine tournante, lors d'une phase de fonctionnement non-stationnaire sur plusieurs secondes. En complément, la méthode peut utiliser en entrée une mesure d'une vitesse de rotation instantanée ou d'une position instantanée d'un arbre rigidement lié à l'arbre du roulement surveillé, ainsi qu'une cinématique des arbres à proximité de ce roulement. Deux analyses spectrales du signal vibratoire sont alors parallèlement effectuées. Préférentiellement, ces traitements sont appliqués sur une fenêtre temporelle glissante restreinte (typiquement une seconde) du signal vibratoire. Le premier traitement comprend en une série d'opérations appliquées sur un spectre d'ordre 1 du signal vibratoire afin d'en supprimer des harmoniques indésirables, de rehausser le niveau de détection d'une signature vibratoire du roulement défectueux et d'effectuer une réduction statistique du. Le second traitement concerne la partie purement aléatoire du signal vibratoire après suppression de la partie tonale, et applique une série d'opérations sur des statistique cyclostationnaires d'ordre 2 afin de révéler des éventuels motifs périodiques cachés. En sortie, le procédé fourni deux spectres, et préférentiellement deux spectrogrammes, portant les informations cyclostationnaires à l'ordre 1 et à l'ordre 2 du signal vibratoire. La signature vibratoire d'un défaut de roulement peut alors être détectée et servira, in fine, à identifier le roulement comportant le défaut.

La méthode proposée est donc un outil de soutien pour un expert ou un opérateur pour diagnostiquer l'état de santé des roulements d'une machine tournante et, au besoin, assister pour l'identification d'un roulement défectueux en vue d'une maintenance.

On entend par « état de santé » d'un roulement, ou plus largement d'une pièce mécanique, la conformité dudit roulement par rapport à un ensemble d'exigences métier, par exemple provenant d'un cahier des charges, concernant sa conception, sa fabrication et son utilisation. Lorsque l'état de santé du roulement est dégradé, pour quelque raison, on parle alors de roulement défectueux.

On entend par « roulement défectueux » un roulement dont les propriétés mécaniques ou géométriques ont été altérées, produisant une anomalie, bien souvent par déséquilibre, lors de sa mise en rotation de l'arbre sur lequel il est assemblé. L'altération peut résulter d'une discontinuité des propriétés de la matière du roulement, conséquence d'aléas survenant lors de la fabrication de la pièce, par la fatigue du roulement au cours de son l'utilisation ou lors de sa manutention. La matière peut, par exemple, avoir été fragilisée au cours du processus de fabrication et son utilisation, générant de fortes contraintes locales au niveau de la zone fragilisée, ou à la suite d'un choc, engendrant un défaut. L'altération peut, en outre, provenir d'un déséquilibre ou une déformation géométrique ou mécanique du roulement, ce qui est par exemple le cas lorsque le roulement est soumis à de très forte contrainte, comme dans une turbomachine. Le terme « défaut » couvre donc toutes les formes d'altération que peut subir le roulement : défaut de matière, inclusion, fissure, défaut ou contamination de lubrifiant, altération des propriétés du matériau, déformation, désalignement, balourd, surcharge, courants de fuite, etc. Chaque type de défaut est détectable dans un signal vibratoire en ce qu'il produit une signature vibratoire particulière.

On entend par « signature vibratoire » un ensemble d'harmoniques dont la répartition des fréquences est spécifique à la source des vibrations, par exemple la signature d'un roulement mis en rotation sous l'action de la rotation de l'arbre auquel il est assemblé. En outre, le contenu harmonique associé au roulement, entre autres les hauteurs, amplitudes ainsi que les propriétés statistiques des fréquences, sont spécifique au roulement en question. De plus, il peut exister une relation ou une relation non-linéaire expliquant la répartition entre elles des fréquences de la signature vibratoire. Par ailleurs, la signature vibratoire dépend de la sollicitation appliquée au roulement ; en particulier, la signature harmonique du roulement peut varier avec sa vitesse de rotation autour de l'axe de l'arbre. Une conséquence directe est que la signature vibratoire du roulement n'apparait pas de façon systématique dans le signal lorsque le roulement est mis en rotation, mais uniquement pour certains régimes moteurs. La signature vibratoire d'un roulement est notamment comprise dans un spectre ou un spectrogramme du signal vibratoire, bien que son amplitude soit faible comparée aux signatures vibratoires d'autres éléments de la machine.

On entend par « spectrogramme » la représentation au cours du temps du contenu fréquentiel d'un ou plusieurs signaux. Par ailleurs, les termes contenu fréquentiel, contenu harmonique, composantes harmoniques et harmoniques font tous référence à l'ensemble des fréquences (ou harmoniques) contenues dans le spectre des signaux, le spectre d'un signal étant obtenu par application d'une transformée de Fourier depuis le domaine temporel vers le domaine fréquentiel.

Un premier aspect de l'invention concerne une méthode de surveillance d'une machine tournante pour la détection d'un défaut d'un roulement.

La machine tournante est, par exemple, un moteur d'aéronef comportant une ou plusieurs lignes d'arbres permettant de transformer l'énergie consommée par le moteur en un mouvement rotatif. La ligne d'arbre comporte plusieurs éléments pour permettre le déplacement de l'aéronef, notamment des roulements.

L'exemple proposé ici en tant que mode de réalisation préférentiel concerne un roulement d'un boitier d'entraînement des accessoires (ABG) d'une turbomachine de la série CFM International CFM56. L'AGB comporte notamment deux arbres de rotations N1 et N2, chacun ayant des régimes de fonctionnement différent. L'arbre de rotation N2 comporte ici au moins un roulement défectueux dont la signature vibratoire est détectée grâce à la méthode 100 selon l'invention. L'arbre de rotation peut, en outre, comporter d'autres roulements non défectueux.

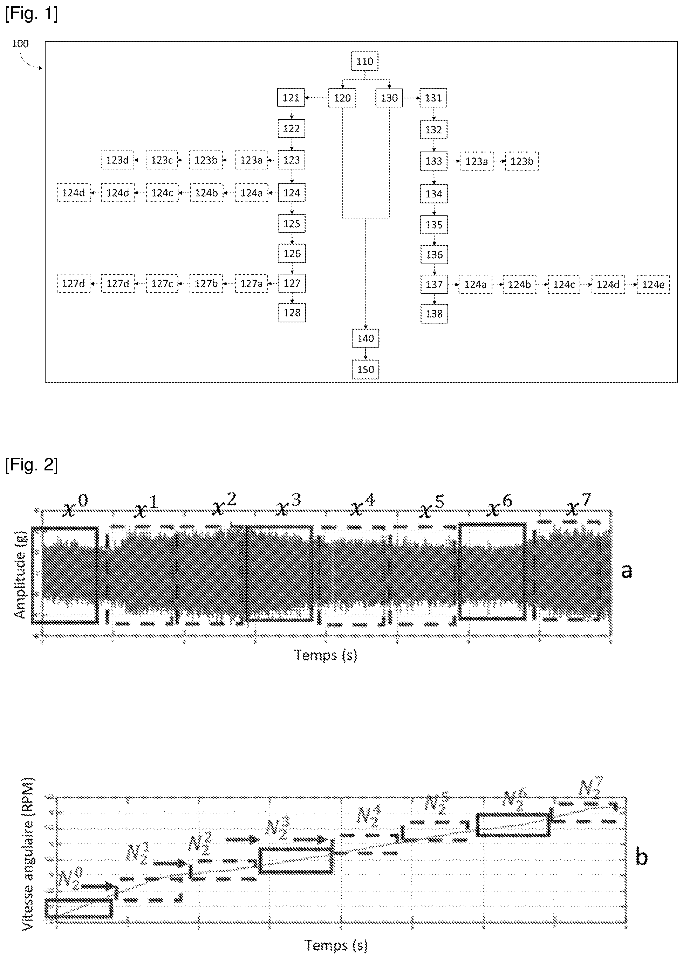

La figure 1 montre une représentation schématique des étapes principales de la méthode 100 selon l'invention. La méthode 100 selon l'invention comporte quatre étapes principales et une étape optionnelle.

La première étape est une étape 110 d'acquisition d'un signal de vibration au moyen d'un capteur de vibration, par exemple un accéléromètre piézoélectrique. Le signal vibratoire est par la suite noté $x(t)$. Le capteur est, par exemple, placé sur une ligne d'arbre de la machine tournante ou à proximité de ladite ligne d'arbre. De façon préférentielle, le capteur est positionné sur un organe fixe de la machine tournante à surveiller. Le capteur peut, en outre, être à distance des roulements surveillés, par exemple une distance supérieure à 5 cm. Le signal comprend les vibrations générées le fonctionnement de la machine tournante.

La fréquence d'échantillonnage du signal est suffisamment élevée pour qu'au moins une partie de la signature vibratoire du roulement défectueux soit dans la gamme de fréquences acquises.

De préférence, le signal vibratoire est acquis sur une durée totale de plusieurs secondes, par exemple sur une durée supérieure à 10 secondes. En outre, le signal vibratoire est de préférence acquis durant une phase de fonctionnement de la machine tournante telle que son régime moteur est non-stationnaire, par exemple durant une phase de régime transitoire.

Le signal vibratoire peut également être acquis de sorte à comporter plusieurs phases différentes de fonctionnement de la machine tournante. Il peut s'agir de phases transitoires dont la durée peut être courte, par exemple moins d'une seconde, ou longue, par exemple plus d'une seconde. Ces phases transitoires peuvent notamment être des phases d'accélération ou de décélération. De façon préférentielle, le signal vibratoire comporte un ensemble de phases de fonctionnement de la machine tournante qui couvre la majorité de la marge opérationnelle de la machine tournante, c'est-à-dire les vitesses de rotation, les accélérations et les décélérations que peut connaître la machine tournante. Cette diversité des régimes de fonctionnement acquis permet de garantir la diversité des signatures vibratoires acquises et de s'assurer que, si la machine tournante comporte un roulement défectueux, sa signature vibratoire sera effectivement comprise dans le signal.

L'étape 110 d'acquisition peut également comprendre l'acquisition d'un signal de vitesse ou d'un signal de position. Ce signal de vitesse ou de position mesure une vitesse de rotation ou une position angulaire d'un arbre de référence rigidement connecté aux roulements surveillés. Par exemple, le capteur de vitesse ou de position peut être assemblé sur l'arbre qui comprend le roulement, ou mesurer la vitesse ou la position de cet arbre. Pour un tel signal, le capteur est, par exemple, un capteur de proximité, un encodeur ou tachymètre. Dans la suite, on utilisera l'appellation « signal de vitesse » pour indifféremment faire référence au signal de vitesse ou au signal de position. La méthode 100 selon l'invention peut, en effet, utiliser l'un ou l'autre des signaux sans que leur nature ne modifie la mise en œuvre de la méthode 100. De façon préférentielle, le signal de vitesse a la même durée que le signal vibratoire. Le signal de vitesse peut, alternativement, avoir une durée plus longue que le signal vibratoire. Dans ce mode de réalisation préférentiel, le signal de vitesse est acquis par un tachymètre sur l'arbre de rotation N2 simultanément au signal vibratoire et pour une même durée. Ce signal de vitesse est noté $N_2(t)$.

L'acquisition peut être réalisée sur un banc d'essai, où la machine tournante est isolée, ou in situ, lorsque la machine est assemblée sur l'aéronef.

La méthode 100 selon l'invention comporte ensuite une étape 120 de détermination d'un spectrogramme d'ordre 1 et une étape 130 de détermination d'un spectrogramme d'ordre 2. Ces deux étapes étant indépendantes l'une de l'autre, c'est-à-dire que l'une ne nécessite pas un résultat de l'autre pour être mise en œuvre, elles peuvent être exécuter simultanément.

Les étapes 120 de détermination du spectrogramme d'ordre 1 et 130 de détermination du spectrogramme d'ordre 2 sont préférentiellement des étapes d'analyse cyclostationnaire d'ordres 1 et 2, respectivement, du signal vibratoire pour obtenir les spectrogrammes d'ordres 1 et 2, respectivement.

De façon préférentielle, le signal vibratoire acquis est analysé sur une pluralité de fenêtre temporelles réduites successives. On parle également d'analyse par fenêtre temporelle glissante ou par convolution du signal vibratoire avec une fonction de fenêtrage. L'objectif est, pour obtenir les spectrogrammes d'ordres 1 et 2, de déterminer des spectres d'ordre 1 et 2, respectivement, à partir du signal vibratoire de chaque fenêtre temporelle. L'intervalle de temps d'une fenêtre temporelle, également appelé taille de la fenêtre, est compris entre 0,1 secondes et 10 secondes ; préférentiellement cet intervalle est compris entre 0,5 et 2,5 secondes. Dans la suite, on note $x_i(t)$ et $N_2^i(t)$ le signal vibratoire et le signal de vitesse, respectivement, contenus dans la i-ème fenêtre temporelle. Il est possible d'appliquer un recouvrement des fenêtres temporelles successives. En ce cas, l'intervalle de temps entre chaque fenêtre temporelle est plus petit que la taille de la fenêtre. Par exemple, l'intervalle de temps entre deux fenêtres temporelles peut être inférieur de 0,25 secondes par rapport à la taille d'une fenêtre temporelle.

Dans le mode de réalisation présenté, la taille d'une fenêtre temporelle est de 1 seconde et il n'y a pas de recouvrement. L'intervalle de temps entre deux fenêtres temporelles est ici de 1 seconde.

La figure 2 présente le signal vibratoire (figure 2a) et le signal de vitesse (2b) acquis lors de l'étape 110 d'acquisition. Un découpage des signaux est ici illustré pour représenter l'analyse par fenêtre temporelle glissante. Le signal vibratoire est alors décomposé en un ensemble de signaux vibratoires notés $x_0$ à $x_7$. Le signal de vitesse est respectivement décomposé en un ensemble de signaux de vitesses, de durée identique, notés $N_2^0$ à $N_2^7$. On observe, dans cette représentation temporelle, la richesse et la complexité du contenu du signal vibratoire, et donc la nécessité d'analyser ce signal dans le domaine spectral pour faciliter son traitement et on analyse.

L'étape 120 de détermination du spectrogramme d'ordre 1 comporte cinq sous-étapes principales successives, numérotées 121 à 125, et deux sous-étapes optionnelles, numérotées 126 et 127. Ces étapes 121 à 127 sont répétées pour chacun des segments temporels, obtenus par convolution du signal vibratoire avec la fonction de fenêtrage. L'étape 120 de détermination du spectrogramme d'ordre 1 comprend également une dernière étape 128.

La sous-étape 121 est une étape de rééchantillonnage angulaire du signal vibratoire $x_i(t)$. Préférentiellement, le rééchantillonnage est réalisé à partir du signal de vitesse $N_2^i(t)$ de l'arbre N2, par exemple par interpolation. Le rééchantillonnage peut également dépendre du type de capteur de vitesse utilisé et de ses caractéristiques. Le rééchantillonnage permet d'obtenir un signal angulaire.

Le rééchantillonnage peut être obtenu en utilisant l'angle de l'arbre N2, lui-même déterminé par $\theta_{N2}^i(t) = \int_0^t N_2^i(s)ds$. Le signal angulaire est alors noté $x^i\left(t\left(\theta_{N2}^i\right)\right)$.

Lors de la sous-étape 122, un spectre d'ordre 1, noté $X^i(\alpha)$ où $\alpha$ est une fréquence, est ensuite déterminé à partir d'une Transformée de Fourier (TF) du signal angulaire $x^i\left(t\left(\theta_{N2}^i\right)\right)$.

En l'occurrence, le spectre d'ordre 1 peut être obtenu par $X^i(\alpha) = \left|\mathfrak{F}_{\theta_{N2}\to\alpha}\left\{x^i\left(t\left(\theta_{N2}^i\right)\right)\right\}\right|^2$, où $\mathfrak{F}_{\theta_{N2}\to\alpha}\{*\}$ désigne l'opérateur de TF. Il est possible d'obtenir ce spectre classiquement au moyen d'une TF de type Transformée de Fourier Rapide (en anglais, « Fast Fourier Transform » - FFT).

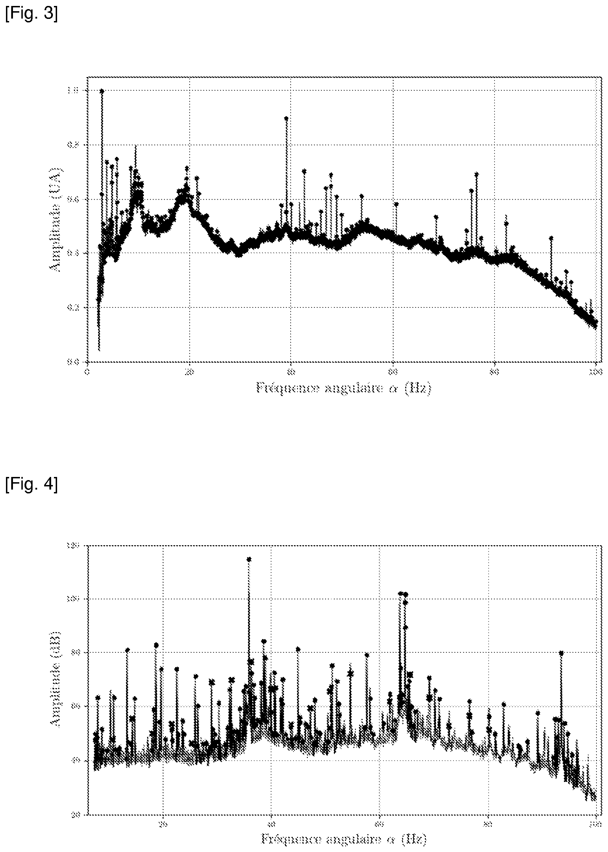

Une illustration du spectre du signal vibratoire est proposée sur la figure 3. Ce spectre présente l'ensemble des fréquences contenues dans le signal vibratoire. Les fréquences potentiellement liées à la rotation des arbres de l'AGB, à savoir les fréquences fondamentales et harmoniques d'ordre supérieur à 1, sont indiquées par des cercles pleins au sommet des pics. Les fréquences potentielles ne sont pas toutes obligatoirement liées à la dynamique théorique du système, et donc la suppression naïve de tous ces composantes risquent de déformer le spectre en retirant des composantes liées au roulement défectueux.

La sous-étape 123 est ici une étape d'application d'une Transformée Delta (TΔ) pour obtenir un spectre d'ordre 1 corrigé. Préférentiellement, la TΔ est appliquée à partir d'une connaissance d'une cinématique liée à l'arbre N2, par exemple à partir de la connaissance d'un ensemble $\Omega_{N2}^{ref}$ de fréquences d'arbres.

La TΔ est ici appliquée pour éliminer le contenu fréquentiel et signatures vibratoires générés par des sources mécaniques et non liés aux roulements de l'arbre de rotation N2, notamment émis par les arbres et les engrenages des transmissions de puissance à proximités du ou des roulements de l'arbre surveillé. Ces fréquences peuvent être connues a priori, par exemple, au moyen d'un analyse dimensionnelle numérique avec un logiciel dédié (par exemple Abaqus, COMSOL ou Catia). Dans ce cas, la sous-étape 123 comprend une sous-sous-étape d'obtention 123a de l'ensemble $\Omega_{N2}^{ref}$ de fréquences d'arbres.

Dans le présent mode de réalisation, 11 fréquences sont connues et associées à la rotation des 11 lignes d'arbre de l'AGB de la CFM56. Ces 11 fréquences forment l'ensemble $\Omega_{N2}^{ref}$ de fréquences d'arbres référencés par N2. Les tableaux 1 et 2 résument la dynamique de l'AGB avec les 11 fréquences de l'ensemble $\Omega_{N2}^{ref}$ de fréquences d'arbres. Il est précisé que ces fréquences sont obtenues avec une vitesse de rotation de l'arbre N2 de 10000 rpm. Dans ce tableau, l'arbre haute pression et l'arbre N2. La dénomination Dent F1 (Hz) correspond à la vitesse de rotation de l'arbre en Hertz, et la dénomination Dent F1 (N2) correspond à la vitesse de rotation de l'arbre par rapport à la vitesse de rotation de l'arbre haute pression.

[Table 1]

| | Ligne 1 | | Ligne 2 | | Ligne 3 | | | N2 tacho visu : 44 dents | Ligne 4 | Ligne 5 | |
|---|---|---|---|---|---|---|---|---|---|---|---|
| | Arbre haute pression | Arbre de transmission radial | | Arbre d'entraînement horizontal | | Alternateur moteur | | Arbre d'entraînement manuel | | Démarreur | |
| | Aval | Amont | Aval | Amont | Aval | Amont | Aval | Amont | Aval | Amont | Aval |
| Nombre de dents | 47 | 35 | 31 | 32 | 47 | 47 | 47 | 62 | 62 | 61 | 31 |
| Vitesse de rotation (rpm) | 10000 | 13429 | | 13009 | | 13009 | | 9862 | | 10023 | |
| Dent F1 (Hz) | 167 | 224 | 224 | 217 | 217 | 217 | 217 | 164 | 164 | 167 | 167 |
| Dent F1 (N2) | | | | | | | | | | | |
| Fréquence de roulement (HZ) | 7833 | 4938 | | 10190 | | 10190 | | 10190 | | 5179 | |
| Roulement (modulo N2) | | | | | | | | | | | |
| Fréquence coïncidence (Hz) | 4,8 | 7,0 | | 216,8 | | 3,6 | | 2,7 | | 2,3 | |

[Table 2]

| | Ligne 6 | | Ligne 7 | | Ligne 8 | | Ligne 9 | | Ligne 10 | | Ligne 11 |
|---|---|---|---|---|---|---|---|---|---|---|---|
| | Pompe à carburant | | Intermédiaire | | Alternateur avion | | Intermédiaire | | Pompe hydraulique | | Unité de lubrification |
| | Amont | Aval | Amont | Aval | Amont | Aval | Amont | Aval | Amont | Aval | Amont |
| Nombre de dents | 73 | 73 | 41 | 41 | 55 | 55 | 73 | 44 | 73 | 73 | 44 |
| Vitesse de rotation (rpm) | 4256 | | 7579 | | 5649 | | 4256 | | 2566 | | 4256 |
| Dent F1 (Hz) | 71 | 71 | 126 | 126 | 94 | 94 | 71 | 71 | 43 | 43 | 71 |
| Dent F1 (N2) | | | | | | | | | | | |
| Fréquence de roulement (HZ) | 5179 | | 5179 | | 5179 | | 5179 | | 3121 | | 3121 |
| Roulement (modulo N2) | | | | | | | | | | | |
| Fréquence coïncidence (Hz) | 2,3 | | 1,7 | | 2,3 | | 1,3 | | 1,0 | | 1,0 |

D'éventuels balourds et/ou déséquilibrages des différents arbres, en particulier des engrenages et roues à aubes qui y sont assemblés, peuvent générer du contenu harmonique additionnel indésirable dans le spectre d'ordre 1. Il est alors nécessaire de considérer toutes les fréquences potentielles qui peuvent apparaitre, dans le spectre d'ordre 1, dans une bande de fréquence [0, $\alpha_{max}$], où $\alpha_{max}$ désigne un ordre maximal prédéfini. Préférentiellement, cet ordre maximal prédéfini est supérieur à la plus haute des harmoniques associées au roulement défectueux, cette plus haute harmonique pouvant être déterminée théoriquement à partir de la géométrie du roulement. Alternativement, l'ordre maximal prédéfini peut être au moins supérieur à la p-ième harmonique du roulement défectueux, p étant un entier supérieur ou égal à 2, lorsque le critère de Nyquist le permet, et préférentiellement supérieur ou égal à 5. Dans ce cas, la sous-étape 123 comprend une sous-sous-étape d'obtention 123b d'un ensemble $\Omega_{N2}^{Tot}$ total, subséquente à la sous-sous-étape d'obtention 123a de l'ensemble $\Omega_{N2}^{ref}$ de fréquences d'arbres. L'ensemble $\Omega_{N2}^{Tot}$ total peut être défini tel que $\Omega_{N2}^{Tot} = \{k\alpha \leq \alpha_{max}, \alpha \in \Omega_{N2}^{ref} \ avec \ k = 1,2,...\}$.

Il est, en outre, possible de restreindre l'ensemble des harmoniques potentielles à un sous-ensemble $\Omega_{N2}^{HarmSign}$ qui comprend des harmoniques statistiquement significatives. Une harmonique $Y(\alpha)$ de l'ensemble $\Omega_{N2}^{Tot}$ total, associée à une fréquence $\alpha$, est considérée comme significative si, à la fréquence $\alpha$, un spectre en Z, c'est-à-dire obtenu par une transformée en Z, associé à l'ensemble $\Omega_{N2}^{Tot}$ total excède un seuil statistique $\zeta$ donné. Dans ce cas, la sous-étape 123 comprend une sous-sous-étape d'obtention 123c de l'ensemble $\Omega_{N2}^{HarmSign}$ des harmoniques significatives, subséquente à la sous-sous-étape d'obtention 123b de l'ensemble $\Omega_{N2}^{Tot}$ total. Le sous-ensemble $\Omega_{N2}^{HarmSign}$ des harmoniques significatives peut être défini par $\Omega_{N2}^{HarmSign} = \{\alpha \in \Omega_{N2}^{Tot} \ et \ Z_Y(\alpha) \geq \zeta\}$, où $Z_Y(\alpha)$ est le spectre en Z associé aux harmoniques $Y(\alpha)$ de l'ensemble $\Omega_{N2}^{Tot}$ total. Ce seuil statistique $\zeta$ est, par exemple, supérieur ou égal à 2. Préférentiellement, ce seuil statistique est supérieur ou égal à 4. Dans les faits, plus ce seuil est grand et plus il est garanti de ne considérer que les harmoniques du roulement et moins de bruit. A titre d'exemple, le seuil statistique $\zeta$ peut être égal à 6, afin de satisfaire le principe 6-sigma.

On entend par « transformée en Z » une opération de standardisation d'un spectre, en l'occurrence ici du spectre, noté $Y$, associé aux harmoniques $Y(\alpha)$ de l'ensemble $\Omega_{N2}^{Tot}$ total. L'opération de standardisation consiste à centrer le spectre $Y$ en lui soustrayant une tendance $\mu$, puis en normalisant le spectre centré $Y_c$ en le divisant par une variance $\sigma$ du spectre $Y$, telle que $Z_Y(\alpha) = \mathcal{Z}\{Y(\alpha)\} = \frac{Y(\alpha) - \mu}{\sigma}$, où $\mathcal{Z}\{*\}$ désigne l'opérateur de standardisation de spectre, également appelé l'opérateur de la TZ. La tendance est, par exemple, la valeur moyenne ou la valeur du spectre $Y$. Préférentiellement, la tendance est une médiane mobile estimée au moyen d'une opération de filtrage médian du spectre $Y$.

Par ailleurs, afin de garantir une déformation minimale du spectre d'ordre 1, la sous-étape 123 peut comprendre une sous-sous-étape d'estimation 123d d'une valeur corrective. La valeur corrective sert ainsi à corriger les harmoniques dans le spectre d'ordre 1 associées aux harmoniques significatives de l'ensemble $\Omega_{N2}^{HarmSign}$ des harmoniques significatives. La valeur corrective peut être déterminée à partir d'une statistique des harmoniques avoisinant l'harmonique concernée. Par exemple, la valeur corrective peut être une médiane ou une moyenne déterminée à partir d'une tendance $\mu_X(\alpha)$ des échantillons voisins, dans spectre d'ordre 1, pour chaque harmonique significative. A titre d'exemple, on peut considérer un certain nombre d'échantillons à gauche et un certain nombre d'échantillons à droite de l'échantillon de l'harmonique significative comme étant voisins de l'harmonique significative. Le nombre d'échantillon à droite et le nombre d'échantillon à gauche peuvent être égaux. Ces nombres d'échantillons sont, par exemple, supérieurs ou égaux à 5. Préférentiellement, 25 échantillons à gauche et 25 échantillons à droite sont utilisés pour déterminer la valeur corrective. La valeur corrective sera alors différente et adaptée pour chaque harmonique significative dans le spectre d'ordre 1.

Le spectre d'ordre 1 corrigé obtenu par T$\Delta$, et noté $X_\Delta^i(\alpha)$, peut donc être déterminé à partir du sous-ensemble $\Omega_{N2}^{HarmSign}$ des harmoniques significatives et de la valeur corrective de chaque harmonique significative tel que :

$$X_\Delta^i(\alpha) = \Delta\{X^i(\alpha), \Omega_{N2}^{HarmSign}\} = \begin{cases} \mu_X(\alpha) & si \ \alpha \in \Omega_{N2}^{HarmSign} \\ X^i(\alpha) & sinon \end{cases}$$

où $\Delta\{X^i(\alpha); \Omega_{N2}^{HarmSign}\}$ désigne la T$\Delta$ de $X^i(\alpha)$ par rapport au sous-ensemble $\Omega_{N2}^{HarmSign}$ des harmoniques significatives. La transformée Delta est donc une opération qui permet de supprimer les harmoniques associés à

l'ensemble $\Omega_{N2}^{HarmSign}$ des harmoniques significatives du spectre d'ordre 1 tout en minimisant la distorsion dudit spectre. Avantageusement, la correction des harmoniques du spectre d'ordre 1 correspondant aux harmoniques significatives permet de conserver la continuité et la régularité du spectre d'ordre 1 tout en éliminant les composantes fréquentielles associées aux éléments et arbres de la machine tournante autres que les roulements de l'arbre N2.

Le spectre d'ordre 1 du signal vibratoire, obtenu T∆, est présenté sur la figure 4. Le spectre d'ordre 1 est tracé par la courbe en tirets et le spectre obtenu par une simple TF est tracé par la ligne continue. Les croix marquent les harmoniques de la signature vibratoire associée à un défaut de la bague externe du roulement de l'arbre N2. Les cercles indiquent, quant à eux, les harmoniques liées aux signatures vibratoires connues des arbres de l'AGB qui n'ont pas de défaut de roulement. On peut remarquer que les harmoniques liés à la cinématique des arbres de la boite d'accessoire sont éliminés sans une déformation visible du spectre, alors que les harmoniques liés au défaut de roulement (qui ne sont pas des entiers multiples de ces arbres) sont conservés.

Les spectres mécaniques peuvent être considérés comme une série statistique aléatoire possédant une moyenne et une variance dépendantes de la fréquence. Sur cette définition, les harmoniques associées à une signature vibratoire, en l'occurrence d'un roulement, peuvent être vues comme des anomalies (en anglais « outliers »). Ces anomalies sont également unidirectionnelles, c'est-à-dire suivant une direction positive de l'axe des fréquences. Plusieurs facteurs peuvent être la cause de la variabilité fréquentielle de ces statistiques, mais les deux facteurs principaux sont :

- la dynamique des système mécaniques, en l'occurrence la machine tournante, résultant en des corrélations temporelles qui, dans le domaine fréquentiel, se traduisent sous la forme de modes de résonnance et de déformations ;
- la présence d'un bruit aléatoire, fortement corrélé au fonctionnement des systèmes mécaniques, qui s'intensifie dans certaines bandes de fréquences, générant alors une forte variance du bruit.

Dans tous les cas, en vue d'obtenir un spectre standard ou universel il est nécessaire de compenser cette variabilité fréquentielle statistique.

A cet effet, la sous-étape 124 est une étape de standardisation spectrale du spectre d'ordre 1 corrigé, sur la base de statistiques robustes, pour obtenir un spectre d'ordre 1 standardisé. Ceci permet de compenser la tendance du spectre (également appelée la moyenne du spectre) et la variance du bruit, tout en étant robuste aux harmoniques associées aux anomalies. En particulier, ces anomalies forment la ou les signatures vibratoires du ou des roulements des arbres de la machine tournante dont on souhaite diagnostiquer l'état de santé.

L'intérêt de cette standardisation est donc d'aplatir le spectre d'ordre 1 afin de compenser les effets de la fonction de transfert moyenne de la machine tournante. Plus précisément, cette standardisation permet de réduire l'énergie du spectre associée aux modes de résonance de la machine tournante, au bruit coloré, ainsi qu'aux autres sources de bruit non-désirées pour analyser le comportement vibratoire des roulements de l'arbre N2

Il peut être remarqué que, dans le cas de spectres de signaux vibratoires, les anomalies émergent strictement du côté positif de la distribution statistique, c'est à dire sur la partie droite de l'axe des fréquences, ce qui permet de simplifier la modélisation des propriétés statistiques du spectre du signal, ici le spectre d'ordre 1, en vue de sa standardisation.

La sous-étape 124 de standardisation spectrale peut ainsi comprendre une sous-sous-étape 124a d'estimation de la tendance $\mu_{\Delta X}^{i}(\alpha)$ du spectre d'ordre 1. Préférentiellement, la tendance est estimée à partir de la détermination d'une médiane mobile. Par exemple, cette détermination de la médiane mobile peut être une opération de filtrage médian du spectre d'ordre 1 qui consiste à calculer la valeur médiane du spectre d'ordre 1 sur la fenêtre temporelle telle que

$$\mu_{\Delta X}^{i}(\alpha) = Medfilt\left( X_{\Delta}^{i}(\alpha) \right)$$ , où *Medfilt*(*) est un opérateur de filtrage médian.

La sous-étape 124 de standardisation spectrale peut ainsi comprendre une sous-sous-étape 124b de détermination d'un spectre d'ordre 1 centré $X_{\Delta c}(\alpha)$ à partir de l'estimation de la tendance $\mu_{\Delta X}(\alpha)$ du spectre d'ordre 1. Par exemple, le spectre d'ordre 1 centré est défini tel que $X_{\Delta c}^{i}(\alpha) = X_{\Delta}^{i}(\alpha) - \mu_{\Delta X}^{i}(\alpha) = X_{\Delta}^{i}(\alpha) - Medfilt\left( X_{\Delta}^{i}(\alpha) \right)$.

En outre, la sous-étape 124 de standardisation spectrale peut également comprendre une sous-sous-étape 124c de détermination d'une dispersion de la série fréquentielle. Cette dispersion, par exemple, est calculée à partir d'un écart moyen médian de la série fréquentielle du spectre d'ordre 1, dont l'intérêt et d'avoir une estimation robuste, au regard des anomalies, de la dispersion de la série. En conséquence, l'écart moyen médian, noté $EMM_{\Delta X}(\alpha)$, peut être défini tel que :

$$EMM_{\Delta X}^{i}(\alpha) = Medfilt\left(\left|X_{\Delta c}^{i}(\alpha)\right|\right) = Medfilt\left(\left|X_{\Delta}^{i}(\alpha) - Medfilt\left(X_{\Delta}^{i}(\alpha)\right)\right|\right).$$

Avantageusement, d'après cette équation, l'écart moyen médian est linéairement lié à la variance, notée $\sigma_{\Delta x}(\alpha)$ de la série fréquentielle telle que $\sigma_{\Delta X}^{i}(\alpha) = kEMM_{\Delta X}^{i}(\alpha)$, où $k$ est un réel prédéterminé, qui dépend de la distribution de la série fréquentielle.

En pratique, cette distribution est inconnue et il est nécessaire de l'estimer de façon empirique. La sous-étape 124 de standardisation spectrale peut donc comprendre une sous-sous-étape 124d d'estimation empirique d'un écart-type, associé à la variance de la série fréquentielle du spectre d'ordre 1. Cette estimation empirique peut être mise en œuvre en utilisant le fait que les anomalies émergent strictement du côté positif de l'axe des fréquences. Par conséquent, un écart-type robuste peut être estimé à partir de la partie droite de la fonction de distribution de probabilité empirique. En d'autres termes cela revient à définir le coefficient k comme étant égal à une moyenne. La sous-sous-étape 124d d'estimation empirique d'un écart-type peut donc être une étape de détermination d'un l'écart-type, ou de la variance de la série fréquentielle, linéairement dépendant de l'écart médian moyen par un coefficient $k^i$ tel que

$$k^{i} = \sqrt[2]{\frac{1}{\int \mathfrak{I}_{X_{\Delta c}^{i}(\alpha)<0}d\alpha} \int \left(X_{\Delta c}^{i}(\alpha)\right)^{2} \mathfrak{I}_{X_{\Delta c}^{i}(\alpha)<0}d\alpha}$$, où $\mathfrak{I}_{X_{\Delta c}^{i}(\alpha)<0}$ désigne une fonction indicatrice qui vaut

1 lorsque $X_{\Delta c}^{i}(\alpha) < 0$ et 0 ailleurs.

Enfin, la sous-étape 124 de standardisation spectrale comprend une sous-sous-étape 124e de détermination du spectre d'ordre 1 standardisé, également appelé spectre en Z, et noté $X_{Z\Delta}^{i}(\alpha)$. Ce spectre d'ordre 1 standardisé peut, en outre, être déterminé à partir de la tendance et de la variance du spectre d'ordre 1 tel que

$$X_{Z\Delta}^{i}(\alpha) = \mathcal{Z}\{X_{\Delta}^{i}(\alpha)\} = \frac{X_{\Delta}^{i}(\alpha)-\mu_{\Delta X}^{i}(\alpha)}{\sigma_{\Delta X}^{i}}$$, où $\mathcal{Z}\{*\}$ désigne l'opérateur de standardisation de spectre, également appelé l'opérateur de la TZ. L'intérêt d'utiliser la TZ est donc de garantir que le spectre d'ordre 1 standardisé est défini par une moyenne nulle et un écart-type robuste et unitaire pour tout $\alpha$.

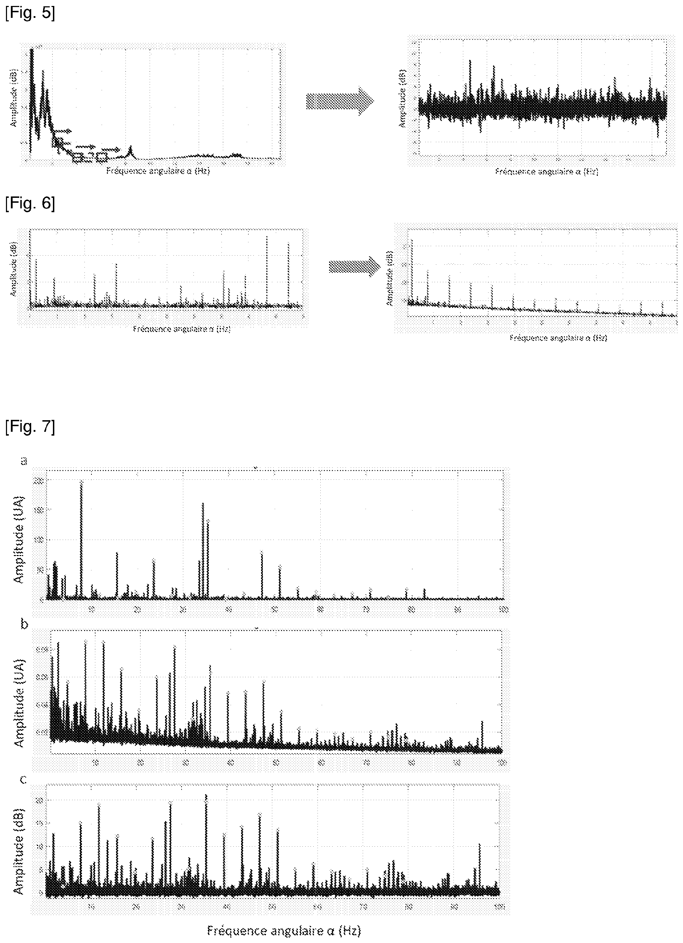

Une illustration de l'effet de la standardisation spectrale est proposée sur la figure 5. On peut voir que la dynamique du signal après standardisation aplatie, de moyenne nulle et d'écart-type unitaire. On remarque également l'émergence de pics dans le spectre qui étaient peu visibles avant la standardisation.

La sous-étape 125 est une étape d'application d'une autocorrélation spectrale pour obtenir un spectre d'ordre 1 aplati, noté $R_{1X}^{i}(\alpha)$. L'application d'une telle autocorrélation permet d'améliorer la détection des signatures des roulements de l'arbre N2 et de réduire l'énergie des harmoniques résultantes de la cinématique de la machine tournante.

Les signatures spectrales générées par des défauts de roulements sont présentes dans le spectre d'ordre 1 sous la forme de motifs périodiques relativement à l'arbre N2. En particulier, ces motifs sont des pics situés à la fréquence ou aux fréquences du défaut, ainsi que sur des bandes latérales d'une fréquence de modulation. La fréquence de modulation peut être la fréquence de rotation de l'arbre du roulement en question ou celle de sa cage (en anglais, « Fundamental Train Frequency » ou FTF). Ces signatures vibratoires présentent donc une régularité, liée à la périodicité, dont il est possible de tirer avantage, à travers l'autocorrélation spectrale, pour améliorer la présence de la signature du ou des roulements de l'arbre N2, tout en réduisant les harmoniques générées par d'autres arbres qui ne présentent pas ce genre de motif périodique relativement à l'arbre N2.

L'autocorrélation spectrale est, par exemple, appliquée suivant la relation $R_{1X}^{i}(\alpha) = \mathcal{R}\{X_{Z\Delta}^{i}(\alpha)\} = \int X_{Z\Delta}^{i}(\beta)X_{Z\Delta}^{i}(\beta + \alpha)\,d\beta$, où $\mathcal{R}\{*\}$ désigne l'opérateur d'autocorrélation spectrale.

En d'autres termes, l'application d'autocorrélation spectrale permet de corriger les fuites d'énergie (en anglais, « spectral leakage ») autour des pics de la signature de roulement, causées par la nature glissante des éléments roulants.

Une illustration de l'effet de l'opération d'autocorrélation spectrale est proposée sur la figure 5. Il est observé que l'émergence de la signature vibratoire du défaut de la bague externe du roulement de l'arbre N2 émerge clairement du reste du spectre, qui lui a perdu en dynamique. La lisibilité du spectre est donc clairement améliorée.

A la fin de la sous-étape 125 d'application de l'autocorrélation spectrale, les signatures des roulements de l'arbre N2, notamment celle du roulement défectueux, sont nettement amplifiées, par rapport aux signatures non-désirés. Ces signatures de roulement permettent alors de diagnostiquer l'état de santé de l'arbre N2 et, s'il y a lieu, le défaut de roulement.

Toutefois, l'application de l'autocorrélation spectrale peut amplifier certaines familles d'harmoniques liés à la dynamique des arbres du fait de modulations ou d'interférences entre leurs signatures vibratoires ; ceci est par exemple le cas de signatures vibratoires présentant une cohérence spatiale entre elles non-négligeable. Par ailleurs, le spectre obtenu par l'autocorrélation spectrale conserve une tendance statistique artificielle liée au biais induit par l'opérateur d'autocorrélation spectrale.

Afin de corriger ce biais et cette amplification non-désirés, la méthode 100 selon l'invention permet optionnellement de mettre en œuvre la sous-étape 126, qui est une étape d'application, sur le spectre d'ordre 1 aplati, d'une deuxième TΔ. L'intérêt de cette étape est d'obtenir un spectre d'ordre 1 aplati corrigé, noté $R_{1\Delta}^i(\alpha)$. Préférentiellement, la TΔ est appliquée à partir de la connaissance de la cinématique liée à l'arbre N2 déjà déterminé à la sous-étape 123 d'application de la TΔ. En particulier, la deuxième TΔ peut être mise en œuvre à partir du sous-ensemble $\Omega_{N2}^{HarmSign}$ des harmoniques significatives, déterminé précédemment à la sous-étape 123 d'application de la TΔ, et de la valeur corrective de chaque harmonique significative telle que $R_{1\Delta}^i(\alpha) = \Delta\{R_1^i(\alpha); \Omega_{N2}^{HarmSig}\}$. Il est précisé que Δ{*} désigne le même opérateur de la TΔ que celui de la sous-étape 123.

L'intérêt de cette étape 126 d'application de la deuxième TΔ est de supprimer tout ou une partie des familles d'harmoniques non-désirées, liées à la cinématique des arbres, qui peuvent apparaitre par l'application de la transformée d'autocorrélation spectrale à l'étape précédente.

La méthode 100 selon l'invention peut encore mettre en œuvre la sous-étape 127, qui est une étape d'application, sur le spectre d'ordre 1 aplati corrigé, d'une deuxième standardisation spectrale pour déterminer un spectre d'ordre 1 réduit, noté $Z_1^i(\alpha)$. Le but cette sous-étape est, notamment, d'aplatir le spectre d'ordre 1 aplati corrigé $R_{1\Delta}^i(\alpha)$, afin de compenser le biais induit par l'application de l'autocorrélation spectrale. Cette seconde application de la standardisation spectrale permet, en sus, de rendre le spectre d'ordre 1 statistiquement universel, c'est-à-dire dont les propriétés statistiques sont comparables aux propriétés statistiques d'autres spectres standardisés, par exemple obtenus pour un même moteur dans d'autres conditions de mesure telles qu'un banc de mesure différent.

Préférentiellement, la standardisation spectrale est réalisée par application d'une seconde TZ, telle que décrite dans les sous-sous-étapes de la sous-étape 124 de standardisation spectrale.

Dans ce cas, la sous-étape 127 comprend une sous-sous-étape 127a d'estimation de la tendance $\mu_{R1}(\alpha)$ du spectre d'ordre 1 aplati corrigé, préférentiellement à partir de la détermination d'une médiane mobile. La détermination de la médiane mobile peut être une opération de filtrage médian, du spectre d'ordre 1 aplati corrigé, qui consiste à calculer la valeur médiane du spectre d'ordre 1 aplati corrigé, sur la fenêtre temporelle, telle que

$$\mu_{R1}^i(\alpha) = Medfilt\left(R_{1\Delta}^i(\alpha)\right),$$ où *Medfilt*(*) est un opérateur de filtrage médian.

La sous-étape 127 comprend, ensuite, une sous-sous-étape 127b de détermination d'un spectre d'ordre 1 aplati corrigé centré $R_{1\mu}^i(\alpha)$ à partir de l'estimation de la tendance $\mu_{R1}(\alpha)$ du spectre d'ordre 1 aplati corrigé. Par exemple, le spectre d'ordre 1 aplati corrigé centré est défini tel que

$$R_{1\mu}^i(\alpha) = R_{1\Delta}^i(\alpha) - \mu_{R1}^i(\alpha) = R_{1\Delta}^i(\alpha) - Medfilt\left(R_{1\Delta}^i(\alpha)\right).$$

En outre, la sous-étape 127 de standardisation spectrale peut également comprendre une sous-sous-étape 127c de détermination d'une dispersion de la série fréquentielle. Cette dispersion, par exemple, est calculée à partir d'un écart moyen médian de la série fréquentielle du spectre d'ordre 1 aplati corrigé, dont l'intérêt et d'en avoir une estimation robuste au regard des anomalies. En conséquence, l'écart moyen médian, noté $EMM_{R1}^i(\alpha)$, peut être défini tel que :

$$EMM_{R1}^i(\alpha) = Medfilt\left(\left|R_{1\Delta}^i(\alpha)\right|\right) = Medfilt\left(\left|R_{1\Delta}^i(\alpha) - Medfilt\left(R_{1\Delta}^i(\alpha)\right)\right|\right).$$

Avantageusement, d'après cette équation, l'écart moyen médian est linéairement lié à la variance, notée $\sigma_{\Delta R}(\alpha)$ de la série fréquentielle telle que $\sigma_{R1}^i(\alpha) = l\,EMM_{R1}^i(\alpha)$, où *l* est un réel prédéterminé, qui dépend de la distribution de la série fréquentielle.

De même que pour le spectre d'ordre 1, à la sous-étape 124, la distribution associée au spectre d'ordre 1 aplati corrigée n'est pas connue et doit être estimée. La sous-étape 127 de standardisation spectrale peut donc comprendre une sous-sous-étape 127d d'estimation empirique d'un écart-type, associé à la variance de la série fréquentielle du spectre d'ordre 1 aplati corrigé. Cette estimation empirique peut être mise en œuvre, comme à la sous-étape 124, en utilisant le fait que les anomalies émergent strictement du côté positif de l'axe des fréquences. Par conséquent, un écart-type robuste peut être estimé à partir de la partie droite de la fonction de distribution de probabilité empirique. En d'autres termes cela revient à définir le coefficient *l* comme étant égal à une moyenne. La sous-sous-étape 127d d'estimation empirique d'un écart-type peut donc être une étape de détermination d'un l'écart-type, ou de la variance de la série fréquentielle, linéairement dépendant de l'écart médian moyen par un coefficient $l^i$ tel que

$$l^i = \sqrt[2]{\frac{1}{\int \mathfrak{T}_{R_{1\Delta}^i(\alpha)<0} d\alpha} \int \left(R_{1\Delta}^i(\alpha)\right)^2 \mathfrak{T}_{R_{1\Delta}^i(\alpha)<0} d\alpha}$$ , où $\mathfrak{T}_{R_{1\Delta}^i(\alpha)<0}$ désigne une fonction indicatrice qui vaut 1 lorsque $R_{1\Delta}^i(\alpha) < 0$ et 0 ailleurs.

La sous-étape 127 de standardisation spectrale comprend une sous-sous-étape 127e de détermination du spectre d'ordre 1 réduit et noté $Z_1^i(\alpha)$. Ce spectre d'ordre 1 réduit peut, en outre, être déterminé à partir de la tendance et de la variance du spectre d'ordre 1 aplati corrigé tel que : $Z_1^i(\alpha) = \mathcal{Z}\{R_{1\Delta}^i(\alpha)\} = \frac{R_{1\Delta}^i(\alpha)-\mu_{R1}^i(\alpha)}{\sigma_{R1}^i(\alpha)}$, où $\mathcal{Z}\{*\}$ désigne l'opérateur de standardisation de spectre, également appelé l'opérateur de la TZ. L'intérêt d'utiliser la TZ est, à nouveau, de garantir que le spectre d'ordre 1 réduit est défini par une moyenne nulle et un écart-type robuste et unitaire pour tout $\alpha$.

Une illustration des spectres obtenues à différentes sous-étapes de l'étape 120 de détermination du spectre d'ordre 1 est proposée sur la figure 7. En l'occurrence, la figure 7.a est le spectre d'ordre 1 obtenu par T∆ ; la figure 7.b est le spectre d'ordre 1 aplati après autocorrélation spectrale ; et la figure 7.c est le spectre d'ordre 1 réduit obtenu en fin de la sous-étape 127. Sur les spectres de la figure 7, les cercles noirs indiquent les positions des harmoniques de la signature vibratoire du roulement défectueux. Ces différentes représentations permettent de saisir tout l'intérêt de la méthode selon l'invention pour améliorer l'émergence de la signature vibratoire du défaut défectueux dans le spectre d'ordre 1.

Enfin, la sous-étape 128 est une étape de concaténation des spectres d'ordre 1 réduits pour former le spectrogramme d'ordre 1. La concaténation est mise en œuvre par la juxtaposition des spectres d'ordre 1 réduits suivant leur ordre chronologique dans le signal vibratoire. Le spectrogramme d'ordre 1, noté $Z_1(i, \alpha)$, tel que

$$Z_1(i,\alpha) = Z_1^i(\alpha)$$ ; $i = 0,1, \dots T - 1$, où T est le nombre de fenêtres temporelles.

Le spectrogramme d'ordre 1 fournit une information complète sur le contenu statistique cyclostationnaire des roulements, à l'ordre 1, pour tous les régimes balayés durant l'acquisition.

Avantageusement, le fait de considérer plusieurs régimes de fonctionnement de la machine tournante améliore significativement l'émergence et la détectabilité des défauts.

L'étape 130 de détermination du spectrogramme d'ordre 2 comporte cinq sous-étapes principales successives, numérotées 131 à 135, et deux sous-étapes optionnelles, numérotées 136 et 137. Ces étapes 131 à 137 sont répétées pour chacun des segments temporels, obtenus par convolution du signal vibratoire avec la fonction de fenêtrage. L'étape 130 de détermination du spectrogramme d'ordre 2 comprend également une dernière étape 138.

La sous-étape 131 est une étape de rééchantillonnage angulaire du signal vibratoire $x_i(t)$. Préférentiellement, le rééchantillonnage est réalisé à partir du signal de vitesse $N_2^i(t)$ de l'arbre N2. Le rééchantillonnage permet d'obtenir un signal angulaire.

Le rééchantillonnage peut être obtenu en utilisant l'angle de l'arbre N2, lui-même déterminé par $\theta_{N_2}(t) = \int_0^t N_2^i(s)ds$. Le signal angulaire est alors noté $x^i(t(\theta_{N2}))$.

La sous-étape 132 est une étape de suppression de la partie déterministe du signal angulaire $x^i(t(\theta_{N2}))$. L'intérêt de cette étape est de supprimer la partie angulairement périodique du signal indépendamment de la source de cette partie déterministe. En d'autres termes, cette étape permet d'estimer la partie aléatoire du signal, également appelé signal résiduel et noté $r^i(t)$, par la suppression de sa partie déterministe.

Le moyen pour obtenir le signal résiduel peut être un outil connu dans la littérature, par exemple, en s'appuyant sur la conception d'un filtre de Wiener.

Préférentiellement, l'outil d'estimation du signal résiduel est la méthode dite « Frequency-Domain Self-Adaptive Noise Cancellation » ou FD-SANC (Antoni, R.B. Randall, Unsupervised noise cancellation for vibration signals: part II-a novel frequency-domain algorithm, Mechanical Systems and Signal Processing, Volume 18, Issue 1, 2004, Pages 103-11*)*. L'intérêt de la méthode FD-SANC est qu'elle est efficace, rapide et complètement aveugle vis-à-vis des sources de la partie déterministe du signal. La méthode FD-SANC est basée sur la conception d'un filtre optimal de Wiener, noté *h*(*t*)*,* qui maximise la rapport signal-sur-bruit des harmoniques au sens de moindre carrée. Le signal résiduel $r^i(t)$ s'écrit alors comme une simple convolution entre le signal $x^i(t)$ et le filtre de Wiener *h*(*t*) tel que $r^i(t) = \int h(s)x^i(t - s)d$.

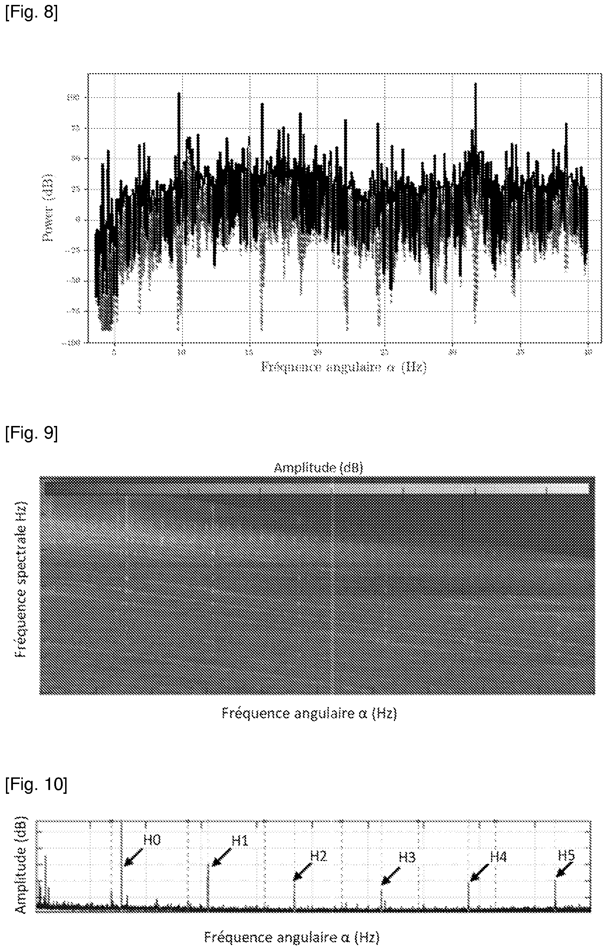

La figure 8 compare le signal résiduel (tirets) obtenu par FD-SANC au signal angulaire (ligne continue). Il peut être observé que l'algorithme FD-SANC permet d'estimer et d'éliminer la majorité des harmoniques, liées au signal déterministe, présentes dans le spectre.

La sous-étape 133 est, ensuite, une étape de détermination d'une cohérence cyclique du signal résiduel. La cohérence cyclique est un outil puissant permettant la détection de composantes cyclostationnaires dans un signal, y compris lorsque le rapport signal-sur-bruit est bas.

La cohérence cyclique est déterminée à partir d'une estimation d'une corrélation cyclique du signal, en l'occurrence du signal résiduel. En conséquence, la sous-étape 133 de détermination de la cohérence cyclique peut comprendre une sous-sous-étape 133a de détermination de la corrélation cyclique du signal résiduel. Préférentiellement, la corrélation cyclique, notée $S_{2r}^i(\alpha, f)$, du signal résiduel est estimée à partir d'une TF double d'une fonction d'autocorrélation sur signal résiduel telle que $S_{2r}^i(\alpha, f) = \mathcal{F}_{\substack{t \to \alpha \\ \tau \to f}}\left\{E\{r^i(t)r^i(t-\tau)\}\right\}$, où $E\{^*\}$ est l'opérateur de l'espérance mathématique et $\tau$ est le décalage temporel. Pour rappel, $\mathcal{F}_{\substack{t \to \alpha \\ \tau \to f}}\{^*\}$ est l'opérateur de la TF et $\alpha$ et $f$ sont deux fréquences.

La sous-étape 133 de détermination de la cohérence cyclique peut, ensuite, comprendre une sous-sous-étape 133b d'estimation de la cohérence cyclique du signal résiduel à partir de la corrélation cyclique du signal résiduel. Préférentiellement, la cohérence cyclique, notée $\gamma_{2r}^i(\alpha, f)$, est obtenue par une normalisation spectrale telle que

$$\gamma_{2r}^i(\alpha, f) = \frac{S_{2r}^i(\alpha, f)}{[S_{2r}^i(f)S_{2r}^i(f+\alpha)]^{1/2}} \ .$$

La figure 9 présente la cohérence cyclique déterminée à partir du signal résiduel pour l'AGB de la CFM56. Cette distribution bi-spectrale est fonction de l'ordre N2 (axe horizontal) et de la fréquence spectrale absolu en Hertz (axe vertical). On remarque l'abondance de lignes spectrales verticales qui sont des composantes purement cyclostationnaires à l'ordre 2 dans le signal.

La sous-étape 134 est une étape de moyennage de la cohérence cyclique. L'intérêt est que la cohérence cyclique moyennée est une représentation spectrale résumant le contenu cyclique cyclostationnaire à l'ordre 2 du signal résiduel. Préférentiellement, la cohérence cyclique moyennée, notée $C_r^i(\alpha)$, est calculée par partir d'une intégrale de l'amplitude carrée de la cohérence cyclique. Par exemple, la cohérence cyclique peut être moyennée telle que

$$C_r^i(\alpha) = \frac{2}{F_s}\int_0^{F_s/2}\left|\gamma_{2r}^i(\alpha, f)\right|^2 df \ , \text{ où } F_s \text{ est la fréquence d'échantillonnage du signal vibratoire.}$$

La figure 10 présente la cohérence cyclique moyennée du signal résiduel, où la répartition de l'intégration des carrés des amplitudes, de la distribution du signal aléatoire, est représentée par rapport à l'axe des fréquences spectrales. Les indications H0 à H5 repèrent les harmoniques émergentes de la signature du roulement défectueux, ici la bague externe de l'arbre N2, permettant la détection du même type de défaut sur l'autre arbre.

La sous-étape 135 est une étape d'application d'une autocorrélation spectrale pour obtenir un spectre d'ordre 2 aplati. Tout comme pour la sous-étape 125, l'intérêt de l'application d'une autocorrélation spectrale permet d'améliorer la détection des signatures des roulements de l'arbre N2 et de réduire l'énergie des harmoniques résultantes de la cinématique de la machine tournante.

L'obtention du spectre d'ordre 2 aplati, noté $R_2^i(\alpha)$, est préférentiellement mise en œuvre de la même façon que pour la sous-étape 125. En l'occurrence, l'autocorrélation spectrale peut être appliquée suivant la relation $R_{2X}^i(\alpha) = \mathcal{R}\left\{C_r^i(\alpha)\right\} = \int C_r^i(\beta)C_r^i(\beta+\alpha)\,d\beta$, où $\mathcal{R}\{^*\}$ désigne, à nouveau, l'opérateur d'autocorrélation spectrale

Il est à noter que contrairement à l'étape 120 de détermination du spectre d'ordre 1, l'étape 130 de détermination du spectre d'ordre 2 ne comprend pas nécessaire une opération de standardisation. En effet, le spectre d'ordre 2 déjà plat du fait de ses propriétés de cohérence cyclique. La raison est que la cohérence cyclique inclut implicitement une opération de blanchiment du spectre. En conséquence, l'étape 130 de détermination du spectre d'ordre 2 peut comprendre une étape intermédiaire, avant ou après la sous-étape 135 d'application de l'autocorrélation spectrale, mais cela n'améliorerait pas l'émergence de la ou des signatures du ou des roulements.

La sous-étape 136 est une étape optionnelle d'application d'une TΔ, à partir du spectre d'ordre 2 aplati pour obtenir un spectre d'ordre 2 aplati corrigé. L'intérêt de cette étape est, pour les mêmes raisons qu'évoquées pour la sous-étape 126, de corriger le biais et l'amplification non-désirés apportés par l'application de l'opérateur d'autocorrélation. En effet, il est rappelé que l'application de l'autocorrélation spectrale peut amplifier certaines familles d'harmoniques liés à la dynamique des arbres du fait de modulations ou d'interférences entre leurs signatures vibratoires ; et que le spectre obtenu par l'autocorrélation spectrale conserve une tendance statistique artificielle liée au biais induit par l'opérateur d'autocorrélation.

Préférentiellement, la sous-étape 136 d'application d'une TΔ est mise en œuvre d'une façon similaire à la sous-étape 126. En particulier, l'application de la TΔ peut être mise en œuvre à partir du sous-ensemble $\Omega_{N2}^{HarmSign}$ des harmoniques significatives, déterminé à la sous-étape 123 d'application de la TΔ, et de la valeur corrective de chaque harmonique significative. Le spectre d'ordre 2 aplati corrigé, noté $R_{2\Delta}^i(\alpha)$, peut être obtenu tel que

$$R_{2\Delta}^i(\alpha) = \Delta\{R_2^i(\alpha); \Omega_{N2}^{HarmSig}\}$$ . Il est précisé que $\Delta\{{}^*\}$ désigne le même opérateur de la TΔ que celui de la sous-étape 123 et de la sous-étape 126.

La sous-étape 137 est une étape optionnelle d'application d'une standardisation spectrale sur le spectre d'ordre 2 aplati corrigé pour obtenir un spectre d'ordre 2 réduit. L'intérêt de cette étape est, tout comme pour la sous-étape 127, d'aplatir le spectre d'ordre 2 afin de compenser le biais induit par l'application de l'autocorrélation spectrale. Cette standardisation spectrale permet, en sus, de rendre le spectre d'ordre 2 statistiquement universel, c'est-à-dire dont les propriétés statistiques sont comparables aux propriétés statistiques d'autres spectres standardisés, par exemple obtenus pour un même moteur dans d'autres conditions de mesure telles qu'un banc de mesure différent.

Préférentiellement, la standardisation spectrale est mise en œuvre par application d'une TZ, telle que décrite dans l'étape 120 de détermination du spectre d'ordre 1.

Dans ce cas, la sous-étape 137 comprend une sous-sous-étape 137a d'estimation de la tendance $\mu_{R2}(\alpha)$ du spectre d'ordre 2 aplati corrigé, préférentiellement à partir de la détermination d'une médiane mobile. La détermination de la médiane mobile peut être une opération de filtrage médian, du spectre d'ordre 2 aplati corrigé, qui consiste à calculer la valeur médiane du spectre d'ordre 2 aplati corrigé, sur la fenêtre temporelle, telle que

$$\mu_{R2}^i(\alpha) = Medfilt\left(R_{2\Delta}^i(\alpha)\right)$$ , où *Medfilt*(*) est un opérateur de filtrage médian.

La sous-étape 137 comprend, ensuite, une sous-sous-étape 137b de détermination d'un spectre d'ordre 2 aplati corrigé centré $R_{2\mu}^i(\alpha)$ à partir de l'estimation de la tendance $\mu_{R2}^i(\alpha)$ du spectre d'ordre 2 aplati corrigé. Par exemple, le spectre d'ordre 2 aplati corrigé centré est défini tel que

$$R_{2\mu}^i(\alpha) = R_{2\Delta}^i(\alpha) - \mu_{R2}^i(\alpha) = R_{2\Delta}^i(\alpha) - Medfilt\left(R_{2\Delta}^i(\alpha)\right)$$ .

En outre, la sous-étape 137 de standardisation spectrale peut également comprendre une sous-sous-étape 137c de détermination d'une dispersion de la série fréquentielle. Cette dispersion, par exemple, est calculée à partir d'un écart moyen médian de la série fréquentielle du spectre d'ordre 2 aplati corrigé, dont l'intérêt et d'en avoir une estimation robuste au regard des anomalies. En conséquence, l'écart moyen médian, noté $EMM_{R2}^i(\alpha)$, peut être défini tel que :

$$EMM_{R2}^i(\alpha) = Medfilt\left(\left|R_{2\Delta}^i(\alpha)\right|\right) = Medfilt\left(\left|R_{2\Delta}^i(\alpha) - Medfilt\left(R_{2\Delta}^i(\alpha)\right)\right|\right).$$

Avantageusement, d'après cette équation, l'écart moyen médian est linéairement lié à la variance, notée $\sigma_{R2}^i(\alpha)$ de la série fréquentielle telle que $\sigma_{R2}^i(\alpha) = lEMM_{R2}(\alpha)$, où *l* est un réel prédéterminé, qui dépend de la distribution de la série fréquentielle.

De même que pour le spectre d'ordre 1, à la sous-étape 124 et à la sous-étape 127, la distribution associée au spectre d'ordre 2 aplati corrigée n'est pas connue et doit être estimée. La sous-étape 137 de standardisation spectrale peut donc comprendre une sous-sous-étape 137d d'estimation empirique d'un écart-type, associé à la variance de la série fréquentielle du spectre d'ordre 2 aplati corrigé. Cette estimation empirique peut être mise en œuvre, comme à la sous-étape 124, en utilisant le fait que les anomalies émergent strictement du côté positif de l'axe des fréquences. Par conséquent, un écart-type robuste peut être estimé à partir de la partie droite de la fonction de distribution de probabilité empirique. En d'autres termes cela revient à définir le coefficient *g* comme étant égal à une moyenne. La sous-sous-étape 137d d'estimation empirique d'un écart-type peut donc être une étape de détermination d'un l'écart-type, ou de la variance de la série fréquentielle, linéairement dépendant de l'écart médian moyen par un coefficient $g^i$ tel que

$$g^i = \sqrt[2]{\frac{1}{\int \mathfrak{I}_{R_{2\Delta}^i(\alpha)<0} d\alpha} \int \left(R_{2\Delta}^i(\alpha)\right)^2 \mathfrak{I}_{R_{2\Delta}^i(\alpha)<0} d\alpha}$$ , où $\mathfrak{I}_{R_{2\Delta}^i(\alpha)<0}$ désigne une fonction indicatrice qui vaut 1 lorsque $R_{2\Delta}^i(\alpha) < 0$ et 0 ailleurs.

La sous-étape 137 de standardisation spectrale comprend une sous-sous-étape 137e de détermination du spectre d'ordre 2 réduit et noté $Z_2^i(\alpha)$. Ce spectre d'ordre 2 réduit peut, en outre, être déterminé à partir de la tendance et de la variance du spectre d'ordre 2 aplati corrigé tel que : $Z_2^i(\alpha) = \mathcal{Z}\{R_{2\Delta}^i(\alpha)\} = \frac{R_{2\Delta}^i(\alpha) - \mu_{R2}^i(\alpha)}{\sigma_{R2}^i(\alpha)}$, où $\mathcal{Z}\{^*\}$

désigne l'opérateur de standardisation de spectre, également appelé l'opérateur de la TZ. L'intérêt d'utiliser la TZ est, à nouveau, de garantir que le spectre d'ordre 1 réduit est défini par une moyenne nulle et un écart-type robuste et unitaire pour tout $\alpha$.

Enfin, la sous-étape 138 est une étape de concaténation des spectres d'ordre 2 réduits pour former le spectrogramme d'ordre 2. La concaténation est mise en œuvre par la juxtaposition des spectres d'ordre 2 réduits suivant leur ordre chronologique dans le signal vibratoire. Le spectrogramme d'ordre 1, noté $Z_2(i, \alpha)$, tel que

$$Z_2(i, \alpha) = Z_2^i(\alpha) \; ; i = 0,1, \dots T\text{-}1,$$ où T est le nombre de fenêtres temporelles.

Le spectrogramme d'ordre 2 fournit une information complète sur le contenu statistique cyclostationnaire des roulements, à l'ordre 2, pour tous les régimes balayés durant l'acquisition.

Avantageusement, le fait de considérer plusieurs régimes de fonctionnement de la machine tournante améliore significativement l'émergence et la détectabilité des défauts.

La quatrième étape de la méthode 100 selon l'invention est une étape 140 de détection d'une signature vibratoire du défaut de roulement. La détection est notamment mise en œuvre à partir du spectrogramme d'ordre 1 et du spectrogramme d'ordre 2.

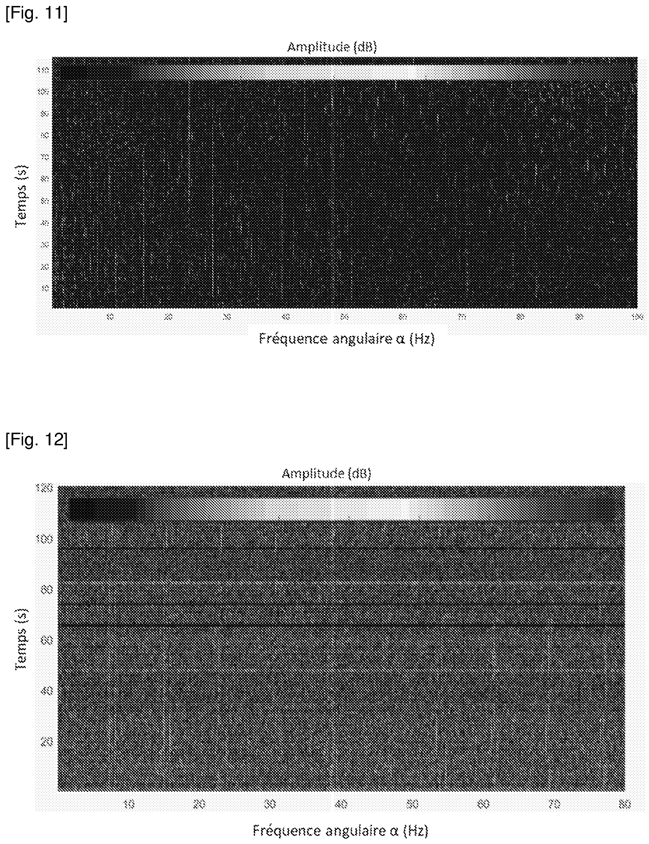

Les figures 11 et 12 présentent les spectrogrammes d'ordre 1 et d'ordre 2 déterminés à partir du signal vibratoire d'AGB, ici acquis sur 115 secondes. La signature vibratoire du roulement défectueux est émergente dans ces spectrogrammes et permet, sans ambiguïté, de la repérer par les lignes verticales blanches. Le roulement défectueux peut, par la suite, être identifié en fonction de la signature détectée et de permettre d'évaluer avec fiabilité l'état de santé du roulement.

La détection et l'identification d'un roulement défectueux permet de diagnostiquer de façon précoce l'apparition d'un défaut de roulement, afin de provoquer une maintenance immédiate, et de prévenir de risques de défaillances de la machine tournante. La méthode proposée permet donc de prolonger la durée de vie de la machine.

A titre d'illustration, est considéré le cas général d'une signature d'un défaut de roulement comprenant la fréquence du défaut $\alpha_f$ et ses harmoniques multiples modulés par une fréquence $\alpha_m$ :

- Pour le cas d'une signature d'un défaut d'un élément roulant par exemple, la fréquence $\alpha_f$ est la frequence caractéristiques des éléments roulant (BSF - Ball Spin Frequency) alors que $\alpha_m$ est la fréquence de cage (FTF).
- Pour un défaut de bague externe, la signature est généralement matérialisé par des harmoniques sans bandes latérale, et $\alpha_f$ sera la BPFO (Ball-Pass Frequency on the Outer race).
- Pour un défaut de bague interne, la fréquence $\alpha_f$ est la frequence caractéristiques de défaut de bague interne alors que $\alpha_m$ est la fréquence de rotation de l'arbre.

Est désigné par $D(\alpha_f, \alpha_m; N_f, N_m) = \{N_f\alpha_f + n_m\alpha_m / n_f = 1 \dots N_f, n_m = \pm1, \dots \pm N_m\}$ l'ensemble des fréquence définissant une signature d'un défaut de roulement. Cet ensemble est fonction de la fréquence du défaut $\alpha_f$ et d'une fréquence de modulation potentielle $\alpha_m$. Ainsi, cette signature est paramétrée par le nombre d'harmoniques $N_f$ et de paires de bandes latérales $N_m$ fixés a priori par l'opérateur.

Il est possible de définir un indicateur associé à un type de défaut donné (associé à la l'ensemble $D$), par exemple comme étant la moyenne des harmoniques :

$$I(Z, D) = \frac{1}{card\{D\}} \sum_{\alpha \in D_{exc}} Z(\alpha)$$

La valeur de cet indicateur est ensuite comparée à un seuil, par exemple *Seuil* = 6 (c.a.d. que cette signature a une émergence dans le spectre 6 fois supérieure à l'écart type). Si $I(Z, D) > $ *Seuil* le défaut est présent, sinon le défaut est absent.

La détection d'un roulement défectueux peut alors être mise en œuvre au moyen d'un algorithme de détection automatique en mettant en œuvre la comparaison au seuil précédente. Il est alternativement possible d'utiliser un logiciel de reconnaissance de signature spectrale anormale s'appuyant sur une signature de référence.

Il est également possible d'utiliser un algorithme d'apprentissage machine pour effectuer la détection ; il peut s'agir d'un algorithme d'apprentissage supervisé ou non-supervisé ; l'algorithme peut, en outre, s'appuyer sur une base de données de signatures de référence ou de seuils prédéterminés de roulement défectueux et/ou non-défectueux. Cette base de données peut être construite sur la base de connaissances théoriques ou empiriques de la dynamique de roulement défectueux ou non-défectueux. La détection peut en outre inclure l'émission d'une alerte contenant une information d'identification pour identifier le roulement défectueux, par exemple sous forme d'un numéro d'identification associé au roulement. L'alerte est, par exemple, émise vers un opérateur ou un expert. Cette alternative de réalisation permet de faciliter le diagnostic de l'état de santé du roulement défectueux et de son impact sur l'état de santé de la machine tournante, par un expert ou un opérateur. Elle permet également d'analyser un grand nombre de signaux et/ou signatures vibratoires simultanément, notamment pour améliorer la détection précoce de défaillances. Enfin, cette alternative permet de réaliser la détection sur la base de critères quantitatifs, par exemple rapport à référentiel ou un outil d'apprentissage. L'intérêt est ici de n'utiliser que des critères qui sont objectifs et non empreints d'un biais d'analyse par un opérateur.

Alternativement, la détection peut être effectuée par l'opérateur ou l'expert sur la base de ses connaissances en analyse vibratoire et des exigences métier, par exemple en matière de sécurité pour la machine tournante. Avantageusement, les spectrogrammes d'ordre 1 et d'ordre 2 permettant la lecture facilitée des signatures vibratoires des roulements. En effet, les spectrogrammes d'ordre 1 et d'ordre 2 montrent des distributions d'harmoniques, en l'occurrence sous forme de signature vibratoire, avec un degré de signifiance évalué par le nombre d'écart-type par rapport au bruit du fond. L'opérateur ou l'expert peut donc facilement analyser et interpréter ces spectrogrammes afin de détecter un roulement défectueux ainsi que sa nature en observant lesdits spectrogrammes.

Chaque signature vibratoire d'un roulement défectueux étant différente, en fonction de la nature du ou des défauts dudit roulement, la méthode 100 permet, avantageusement, de détecter la nature de la défaillance dudit roulement. La détection du défaut de roulement permet alors d'évaluer l'état de santé du roulement. L'information d'identification peut, dans ce cas, comprendre également une information concernant la nature du défaut du roulement, par exemple sous la forme de mots clefs pour résumer la nature du défaut.

L'étape 140 de détection peut, par ailleurs, comprendre une étape de moyennage des spectrogrammes d'ordre 1 et d'ordre 2. Par exemple, un spectrogramme d'ordre 1 moyenné, noté $\bar{Z}_1(\alpha)$, est déterminé tel que

$$\bar{Z}_1(\alpha) = \sum_{i=0}^{T-1} Z_1(i, \alpha)$$

; $i$ = 0,1, ... $T$ - 1, et un spectrogramme d'ordre 2 moyenné, noté $\bar{Z}_2(\alpha)$, est déterminé

tel que $\bar{Z}_2(\alpha) = \sum_{i=0}^{T-1} Z_2(i, \alpha)$. La détection du roulement défectueux peut, éventuellement, être mise à œuvre à partir des spectrogrammes d'ordre 1 et d'ordre 2 moyennés.

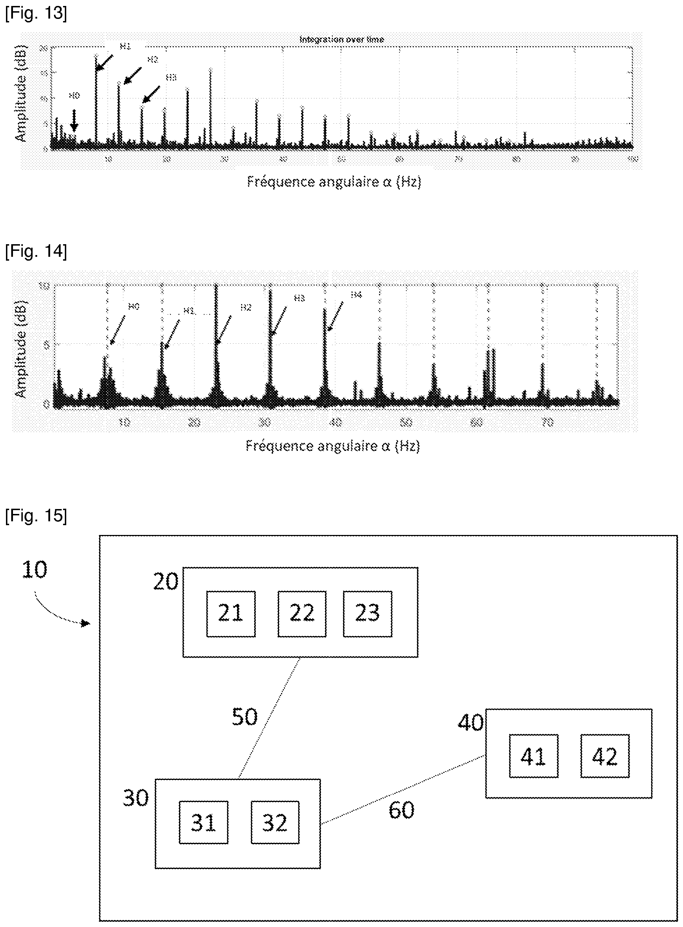

Les figures 13 et 14 présentent les spectrogrammes d'ordre 1 et d'ordre 2 moyennés pour la détection du roulement défectueux de l'AGB de la CFM56. Les indicateurs H0 à H3 sur le spectrogramme d'ordre 1 (figure 13) et les indicateurs H0 à H4 sur le spectrogramme d'ordre 2 (figure 14) identifient les harmoniques spécifiques du roulement défectueux de l'arbre N2. Cette représentation permet également de faire émerger la signature du roulement défectueux dans les spectrogrammes d'ordre 1 et d'ordre 2 et de faciliter la détection et l'identification du défaut de roulement.

La méthode 100 selon l'invention comprend optionnellement une étape 150 d'une opération de maintenance. L'opération de maintenance peut être mise en œuvre en fonction de la détection d'un ou plusieurs roulements défectueux, dont les signatures ont permis la détection à l'étape précédente. A titre d'exemple, l'opération de maintenance est une opération de réparation ou de remplacement dudit roulement.

L'opération de maintenance peut notamment être mise en œuvre en fonction de la nature du défaut de roulement détectée et de l'état de santé évalué du roulement. Plus particulièrement, une criticité du défaut du roulement peut être mise en œuvre afin d'évaluer de la nécessité d'effectuer l'opération de maintenance. Cette criticité peut être évaluée sur la base des spectrogrammes d'ordre 1 et d'ordre 2 et d'exigences métiers en matière de sécurité de la machine tournante.

Alternativement, à l'étape 120 de détermination du spectre du signal angulaire, il est possible de déterminer le spectre d'ordre 1 à partir d'une procédure de Welch. L'intérêt est ainsi de réduire la variance du bruit aléatoire dans le spectre d'ordre 1 du signal angulaire. Dans ce cas, déterminer le spectre d'ordre 1 est équivalent à déterminer une densité spectrale de puissante du signal angulaire.

Dans le cas où la sous-étape 124 de standardisation spectrale n'aurait pas été mise en œuvre, la sous-étape 127 de deuxième standardisation spectrale peut comprendre les sous-sous-étapes de la sous-étape 124, afin de mettre en œuvre la TZ et déterminer le spectre d'ordre 1 réduit.

Alternativement, les étapes 121 et 131 de rééchantillonnage peuvent être mises en œuvre dans une étape 115 de rééchantillonnage du signal vibratoire au lieu d'être effectuées dans chacune des étapes 120 et 130 de détermination des spectrogrammes d'ordre 1 et d'ordre 2, respectivement.

Avantageusement, la méthode 100 permettant l'analyse de signaux sur une fenêtre temporelle de courte durée, il est possible de mettre en œuvre la méthode 100 pour effectuer une surveillance en temps réel des roulements de la machine tournante. Ce qui permet à l'opérateur ou à l'expert de déclencher à la volée, c'est-à-dire dès la détection de la signature du roulement défectueux, l'opération de maintenance.

Alternativement, le signal vibratoire peut être un signal acoustique, mesuré au moyen d'un capteur acoustique tel un microphone ou un capteur piézoélectrique. Les différentes étapes de la méthode 100 peuvent être indifféremment appliquées au signal vibratoire comme au signal acoustique.

Dans un mode de réalisation alternatif, le spectrogramme d'ordre 1 est construit à partir d'un premier signal

**EP 4 511 628 B1**

vibratoire et le spectrogramme d'ordre 2 est construit à partir d'un second signal vibratoire. Les premier et second signaux vibratoires sont préférentiellement acquis au moyen d'un capteur de vibration, comme un accéléromètre, à des positions différentes de la machine tournante, par exemple sur deux arbres différents. Les signaux vibratoires peuvent également être acquis sur le même arbre. Avantageusement, ce mode de réalisation permet d'acquérir plus d'informations dans les spectrogrammes pour améliorer la robustesse de la détection d'une signature vibratoire d'un roulement défectueux.

Ainsi, le premier signal vibratoire est utilisé dans l'étape 120 de détermination du spectrogramme d'ordre 1 et le second signal vibratoire est utilisé dans l'étape 130 de détermination du spectrogramme d'ordre 2. De façon préférentielle, les premier et second signaux vibratoires sont acquis pour une même durée et leur acquisition est synchronisée pour être simultanée.

La méthode 100 selon l'invention peut être mise en œuvre par un système 10 de surveillance d'une machine tournante pour la détection d'un défaut d'un roulement, tel que décrit sur la figure 15. Le système. Le système 10 comprend un module d'acquisition 20, un module de traitement 30 et, optionnellement, un module de détection 40.

Le module d'acquisition 20 sert à mettre en œuvre l'étape 110 d'acquisition et comporte le capteur de vibration 21a, une mémoire 22 et un processeur 23. Il s'agit, par exemple, d'un appareil d'acquisition adapté pour l'acquisition de signaux vibratoires. De préférence, la mémoire 22 comporte des instructions qui, lorsqu'elles sont exécutées, permettent l'exécution de l'étape 110 d'acquisition de la méthode 100 par le processeur 23. Alternativement, le capteur de vibration 21a est le capteur acoustique 21b. Optionnellement, le module d'acquisition comprend le capteur de vitesse angulaire 21c.

Le module de traitement 30 sert à mettre en œuvre es étapes de traitement du signal vibratoire acquis, en l'occurrence les étapes 120 et 130 de détermination des spectrogrammes d'ordre 1 et d'ordre 2, respectivement. Le module de traitement 30 comprend un processeur 31 et une mémoire 32. La mémoire 32 comporte des instructions qui, lorsqu'elles sont exécutées, permettent l'exécution des étapes 120 de détermination du spectrogramme d'ordre 1 et 130 de détermination du spectrogramme d'ordre 2 de la méthode 100 par le processeur 31.

Le système 10 peut également comprendre un moyen de communication 50 pour permettre une communication de données entre le module d'acquisition 20 et le module de traitement 30. Il 'agit, par exemple, d'une connexion filaire de type USB ou Ethernet, ou d'une connexion non-filaire de type Wifi.

Le module de détection 40 sert à la mise en œuvre de l'étape 140 de détection d'une signature vibratoire d'un roulement défectueux, dans le cas où la détection est effectuée de façon automatique par un algorithme. Le module de détection comprend un processeur 41 et une mémoire 42. La mémoire 42 comporte des instructions qui, lorsqu'elles sont exécutées, permettent l'exécution de l'étape 140 de détection d'une signature vibratoire d'un roulement défectueux de la méthode 100 par le processeur 41.

Le système 10 peut également comprendre un moyen de communication 60 pour permettre une communication de données entre le module de traitement 30 et le module de détection 40. Il 'agit, par exemple, d'une connexion filaire de type USB ou Ethernet, ou d'une connexion non-filaire de type Wifi.

**Revendications**

1. Méthode (100) de surveillance d'une machine tournante pour la détection d'un défaut d'un roulement, la méthode (100) comprenant les étapes suivantes :

   - Acquisition (110) d'un signal vibratoire de la machine tournante mesuré par un capteur de vibrations ;
   - Détermination (120) d'un spectrogramme d'ordre 1 par concaténation d'une pluralité de spectres d'ordre 1 réduits, les spectres d'ordre 1 réduits étant obtenus par :

     ◦ Application d'une transformée delta pour corriger une pluralité de spectres d'ordre 1 obtenus par transformée de Fourier du signal vibratoire, la transformée delta supprimant des sources interférentes dans les spectres d'ordre 1 à partir d'un sous-ensemble d'harmoniques significatifs et d'une valeur corrective de chaque harmonique significatif ;
     ◦ Détermination de la pluralité de spectres d'ordre 1 réduits par application d'une standardisation spectrale aux spectres d'ordre 1 corrigés, les spectres d'ordre 1 réduits étant de moyenne nulle et d'écart-type unitaire ;

   - Détermination (130) d'un spectrogramme d'ordre 2 par concaténation d'une pluralité de spectres d'ordre 2 réduits, les spectres d'ordre 2 réduits étant obtenus par :

     ◦ Détermination et moyennage d'une cohérence cyclique à partir du signal vibratoire pour obtenir une pluralité de spectres d'ordre 2 moyennés, la cohérence cyclique étant déterminée à partir d'une double transformée de Fourier ;

∘ Application d'une transformée delta sur la pluralité de spectres d'ordre 2 moyennés puis d'une standardisation spectrale pour obtenir la pluralité de spectres d'ordre 2 réduits, la transformée delta étant appliquée à partir du sous-ensemble d'harmoniques significatifs et de la valeur corrective de chaque harmonique significatif ;

- Détection (140) d'une signature vibratoire du défaut de roulement à partir du spectrogramme d'ordre 1 et du spectrogramme d'ordre 2 et s'appuyant sur une signature de référence.

2. Méthode (100) de surveillance selon la revendication précédente, dans laquelle l'étape de détection (140) comprend en outre une identification du roulement défectueux à partir de ladite signature vibratoire.

3. Méthode (100) de surveillance selon la revendication 2, comprenant en outre une étape de maintenance (150) du roulement défectueux identifié.

4. Méthode (100) de surveillance selon l'une des revendications précédentes, dans laquelle le signal vibratoire est acquis sur une pluralité de phases de fonctionnement différentes de la machine tournante.

5. Méthode (100) de surveillance selon l'une des revendications précédentes, dans laquelle le spectrogramme d'ordre 1 et le spectrogramme d'ordre 2 sont déterminés à partir d'une Transformée de Fourier appliquée au signal vibratoire sur une pluralité de fenêtres temporelles successives dont une durée est comprise entre 0,1 s et 10 s.

6. Méthode (100) de surveillance selon l'une des revendications précédentes, dans laquelle l'étape d'acquisition (110) comprend en outre l'acquisition d'un signal de vitesse de la machine tournante mesuré au moyen d'un capteur de vitesse.

7. Méthode (100) de surveillance selon la revendication 6, comprenant en outre, à l'étape de détermination (120) du spectrogramme d'ordre 1, les étapes suivantes :

- Pour chaque fenêtre temporelle de la pluralité de fenêtres temporelles :

∘ Rééchantillonnage (121) du signal vibratoire à partir du signal de vitesse pour obtenir un signal angulaire ;
∘ Détermination (122) d'un spectre d'ordre 1 par application d'une Transformée de Fourier appliquée au signal angulaire ;
∘ Détermination (123) d'un spectre d'ordre 1 corrigé par application d'une Transformée Delta au spectre d'ordre 1 ;
∘ Détermination (124) d'un spectre d'ordre 1 standardisé par application d'une standardisation spectrale au spectre d'ordre 1 corrigé ;
∘ Détermination (125) d'un spectre d'ordre 1 aplati par application d'une autocorrélation spectrale au spectre d'ordre 1 standardisé ;

- Concaténation (128) des spectres d'ordre 1 aplatis, déterminés pour chaque fenêtre temporelle, pour former le spectrogramme d'ordre 1.

8. Méthode (100) de surveillance selon la revendication 7 comprenant en outre, à l'étape de détermination (120) du spectrogramme d'ordre 1, les étapes suivantes :

- Pour chaque fenêtre temporelle de la pluralité de fenêtres temporelles :

∘ Détermination (126) d'un spectre d'ordre 1 aplati corrigé par application d'une Transformée Delta au spectre d'ordre 1 aplati ;
∘ Détermination (127) du spectre d'ordre 1 réduit par application d'une standardisation spectrale au spectre d'ordre 1 aplati corrigé ;

l'étape de concaténation (128) étant la concaténation des spectres d'ordre 1 réduit, déterminés pour chaque fenêtre temporelle, pour former le spectrogramme d'ordre 1.

9. Méthode (100) de surveillance selon l'une des revendications 6 à 8 comprenant en outre, à l'étape de détermination (130) du spectrogramme d'ordre 2, les étapes suivantes :

- Pour chaque fenêtre temporelle de la pluralité de fenêtres temporelles :

  ∘ Rééchantillonnage (131) du signal vibratoire à partir du signal de vitesse pour obtenir un signal angulaire ;
  ∘ Suppression (132) de la partie déterministe du signal angulaire pour obtenir un signal vibratoire corrigé ;
  ∘ Détermination (133) d'un spectre d'ordre 2 à partir d'une cohérence cyclique du signal vibratoire corrigé ;
  ∘ Moyennage (134) du spectre d'ordre 2 ;
  ∘ Détermination (135) d'un spectre d'ordre 2 aplati par application d'une autocorrélation spectrale au spectre d'ordre 2 moyenné ;

- Concaténation (138) des spectres d'ordre 2 aplatis, déterminés pour chaque fenêtre temporelle, pour former le spectrogramme d'ordre 2.

10. Méthode de surveillance selon la revendication 9 méthode comprenant en outre, à l'étape de détermination (130) du spectrogramme d'ordre 2, les étapes suivantes :

    - Pour chaque fenêtre temporelle de la pluralité de fenêtres temporelles :

      o Détermination (136) d'un spectre d'ordre 2 aplati corrigé par application d'une Transformée Delta au spectre d'ordre 2 aplati ;
      o Détermination (137) du spectre d'ordre 2 réduit par application d'une standardisation spectrale au spectre d'ordre 2 aplati corrigé ;

    l'étape de concaténation (138) étant la concaténation des spectres d'ordre 2 réduits, déterminés pour chaque fenêtre temporelle, pour former le spectrogramme d'ordre 2.

11. Produit-programme d'ordinateur comprenant des instructions qui, quand le programme est exécuté sur un ordinateur, conduisent celui-ci à mettre en œuvre les étapes de la méthode (100) selon l'une des revendications 1 à 10.

12. Support d'enregistrement lisible par ordinateur comprenant des instructions qui, lorsqu'elles sont exécutées par un ordinateur, conduisent celui-ci à mettre en œuvre les étapes de la méthode (100) selon l'une des revendications 1 à 10.

**Patentansprüche**

1. Verfahren (100) zur Überwachung einer rotierenden Maschine zum Erkennen eines Lagerfehlers, wobei das Verfahren (100) die folgenden Schritte umfasst:

   - Erfassung (110) eines von einem Schwingungssensor gemessenen Schwingungssignals der rotierenden Maschine;
   - Bestimmung (120) eines Spektrogramms erster Ordnung durch Verkettung einer Vielzahl reduzierter Spektren erster Ordnung, wobei die reduzierten Spektren erster Ordnung erhalten werden durch:

     ∘ Anwendung einer Delta-Transformation zur Korrektur einer Vielzahl von Spektren erster Ordnung, die durch Fourier-Transformation des Schwingungssignals erhalten wurden, wobei die Delta-Transformation Störquellen in den Spektren erster Ordnung aus einer Teilmenge signifikanter Oberschwingungen und einem Korrekturwert jeder signifikanten Oberschwingung entfernt;
     ∘ Bestimmung der Vielzahl reduzierter Spektren erster Ordnung durch Anwendung einer spektralen Standardisierung auf die korrigierten Spektren erster Ordnung, wobei die reduzierten Spektren erster Ordnung einen Mittelwert von Null und eine Standardabweichung von Eins haben;

   - Bestimmung (130) eines Spektrogramms zweiter Ordnung durch Verkettung einer Vielzahl reduzierter Spektren zweiter Ordnung, wobei die reduzierten Spektren zweiter Ordnung erhalten werden durch:

     ∘ Bestimmung und Mittelung einer zyklischen Kohärenz aus dem Schwingungssignal, um eine Vielzahl von gemittelten Spektren zweiter Ordnung zu erhalten, wobei die zyklische Kohärenz aus einer doppelten Fourier-Transformation bestimmt wird;
     ∘ Anwendung einer Delta-Transformation auf die Vielzahl gemittelter Spektren zweiter Ordnung und anschließende spektrale Standardisierung, um die Vielzahl reduzierter Spektren zweiter Ordnung zu erhalten, wobei die Delta-Transformation auf der Grundlage der Teilmenge signifikanter Oberschwingungen und des Korrekturwerts jeder signifikanten Oberschwingung angewendet wird;

- Erkennung (140) einer Schwingungssignatur des Lagerfehlers anhand des Spektrogramms erster Ordnung und des Spektrogramms zweiter Ordnung und unter Verwendung einer Referenzsignatur.

2. Überwachungsverfahren (100) nach dem vorhergehenden Anspruch, bei dem der Erkennungsschritt (140) ferner eine Identifizierung des defekten Lagers anhand der Schwingungssignatur umfasst.

3. Überwachungsverfahren (100) nach Anspruch 2, das ferner einen Wartungsschritt (150) für das identifizierte defekte Lager umfasst.

4. Überwachungsverfahren (100) nach einem der vorstehenden Ansprüche, bei dem das Schwingungssignal über eine Vielzahl verschiedener Betriebsphasen der rotierenden Maschine erfasst wird.

5. Überwachungsverfahren (100) nach einem der vorstehenden Ansprüche, bei dem das Spektrogramm erster Ordnung und das Spektrogramm zweiter Ordnung aus einer Fourier-Transformation bestimmt werden, die auf das Schwingungssignal über mehrere aufeinanderfolgende Zeitfenster mit einer Dauer zwischen 0,1 s und 10 s angewendet wird.

6. Überwachungsverfahren (100) nach einem der vorstehenden Ansprüche, bei dem der Erfassungsschritt (110) ferner die Erfassung eines Geschwindigkeitssignals der rotierenden Maschine umfasst, das mittels eines Geschwindigkeitssensors gemessen wird.

7. Überwachungsverfahren (100) nach Anspruch 6, das im Schritt der Bestimmung (120) des Spektrogramms erster Ordnung außerdem die folgenden Schritte umfasst:

- Für jedes Zeitfenster der mehreren Zeitfenster:

o Neuberechnung (121) des Schwingungssignals aus dem Geschwindigkeitssignal, um ein Winkelsignal zu erhalten;
o Bestimmung (122) eines Spektrums erster Ordnung durch Anwendung einer Fourier-Transformation auf das Winkelsignal;
o Bestimmung (123) eines korrigierten Spektrums erster Ordnung durch Anwendung einer Delta-Transformation auf das Spektrum erster Ordnung;
o Bestimmung (124) eines standardisierten Spektrums erster Ordnung durch Anwendung einer spektralen Standardisierung auf das korrigierte Spektrum erster Ordnung;
o Bestimmung (125) eines abgeflachten Spektrums erster Ordnung durch Anwendung einer spektralen Autokorrelation auf das standardisierte Spektrum erster Ordnung;

- Verkettung (128) der für jedes Zeitfenster bestimmten abgeflachten Spektren erster Ordnung, um das Spektrogramm erster Ordnung zu bilden.

8. Überwachungsverfahren (100) nach Anspruch 7, das im Schritt der Bestimmung (120) des Spektrogramms erster Ordnung zusätzlich die folgenden Schritte umfasst:

- Für jedes Zeitfenster der mehreren Zeitfenster:

o Bestimmung (126) eines korrigierten abgeflachten Spektrums erster Ordnung durch Anwendung einer Delta-Transformation auf das abgeflachte Spektrum erster Ordnung;
o Bestimmung (127) des reduzierten Spektrums erster Ordnung durch Anwendung einer spektralen Standardisierung auf das korrigierte abgeflachte Spektrum erster Ordnung;

wobei der Verkettungsschritt (128) das Verketten der reduzierten Spektren erster Ordnung ist, die für jedes Zeitfenster bestimmt wurden, um das Spektrogramm erster Ordnung zu bilden.

9. Überwachungsverfahren (100) nach einem der Ansprüche 6 bis 8, das im Schritt der Bestimmung (130) des Spektrogramms zweiter Ordnung zusätzlich die folgenden Schritte umfasst:

- Für jedes Zeitfenster der mehreren Zeitfenster:

    o Neuberechnung (131) des Schwingungssignals aus dem Geschwindigkeitssignal, um ein Winkelsignal zu erhalten;
    o Unterdrückung (132) des deterministischen Teils des Winkelsignals, um ein korrigiertes Schwingungssignal zu erhalten;
    o Bestimmung (133) eines Spektrums zweiter Ordnung aus einer zyklischen Kohärenz des korrigierten Schwingungssignals;
    o Mittelung (134) des Spektrums zweiter Ordnung;
    o Bestimmung (135) eines abgeflachten Spektrums zweiter Ordnung durch Anwendung einer spektralen Autokorrelation auf das gemittelte Spektrum zweiter Ordnung;

- Verkettung (138) der für jedes Zeitfenster bestimmten abgeflachten Spektren zweiter Ordnung, um das Spektrogramm zweiter Ordnung zu bilden.

10. Überwachungsverfahren nach Anspruch 9, wobei das Verfahren im Schritt der Bestimmung (130) des Spektrogramms zweiter Ordnung außerdem die folgenden Schritte umfasst:

- Für jedes Zeitfenster der mehreren Zeitfenster:

    o Bestimmung (136) eines korrigierten abgeflachten Spektrums zweiter Ordnung durch Anwendung einer Delta-Transformation auf das abgeflachte Spektrum zweiter Ordnung;
    o Bestimmung (137) des reduzierten Spektrums zweiter Ordnung durch Anwendung einer spektralen Standardisierung auf das korrigierte abgeflachte Spektrum zweiter Ordnung;

wobei der Verkettungsschritt (138) das Verketten der reduzierten Spektren zweiter Ordnung ist, die für jedes Zeitfenster bestimmt wurden, um das Spektrogramm zweiter Ordnung zu bilden.

11. Computerprogrammprodukt, das Anweisungen umfasst, die, wenn das Programm auf einem Computer ausgeführt wird, diesen veranlassen, die Schritte des Verfahrens (100) gemäß einem der Ansprüche 1 bis 10 auszuführen.

12. Computerlesbares Aufzeichnungsmedium mit Anweisungen, die, wenn sie von einem Computer ausgeführt werden, diesen veranlassen, die Schritte des Verfahrens (100) nach einem der Ansprüche 1 bis 10 auszuführen.

**Claims**

1. A method (100) for monitoring a rotating machine to detect a fault in a bearing, the method (100) comprising the following steps of:

- Acquiring (110) a vibratory signal from the rotating machine measured by a vibration sensor;
- Determining (120) an order-1 spectrogram by concatenating a plurality of reduced order-1 spectra, the reduced order-1 spectra being obtained by:

    o Applying delta transform to correct a plurality of order-1 spectra obtained by Fourier transforming the vibratory signal, the delta transform deleting interfering sources in the order-1 spectra from a subset of significant harmonics and a corrective value of each significant harmonic;
    o Determining the plurality of reduced order-1 spectra by applying spectral standardisation to the corrected order-1 spectra, the reduced order-1 spectra being of zero mean and a unit standard deviation;

- Determining (130) an order-2 spectrogram by concatenating a plurality of reduced order-2 spectra, the reduced order-2 spectra being obtained by:

    o Determining and averaging a cyclic coherence from the vibratory signal to obtain a plurality of averaged order-2 spectra, the cyclic coherence being determined from a double Fourier transform;
    o Applying delta transform to the plurality of averaged order-2 spectra and then spectral standardisation to obtain the plurality of reduced order-2 spectra, the delta transform being applied from the subset of significant harmonics and the corrective value of each significant harmonic;

- Detecting (140) a vibratory signature of the bearing fault from the order-1 spectrogram and the order-2 spectrogram and based on a reference signature.

2. The monitoring method (100) according to the preceding claim, wherein the detection step (140) further comprises identifying the faulty bearing from said vibratory signature.

3. The monitoring method (100) according to claim 2, further comprising a maintenance step (150) of the faulty bearing identified.

4. The monitoring method (100) according to one of the preceding claims, wherein the vibratory signal is acquired over a plurality of different operating phases of the rotating machine.

5. The monitoring method (100) according to one of the preceding claims, wherein the order-1 spectrogram and the order-2 spectrogram are determined from a Fourier Transform applied to the vibratory signal over a plurality of successive time windows with a duration of between 0.1 s and 10 s.

6. The monitoring method (100) according to one of the preceding claims, wherein the acquisition step (110) further comprises acquiring a speed signal of the rotating machine measured by means of a speed sensor.

7. The monitoring method (100) according to claim 6, further comprising, in the step (120) of determining the order-1 spectrogram, the following steps of:

   - For each time window of the plurality of time windows:

      o Resampling (121) the vibratory signal from the speed signal to obtain an angular signal;
      o Determining (122) an order-1 spectrum by applying Fourier Transform to the angular signal;
      o Determining (123) an corrected order-1 spectrum by applying Delta Transform to the order-1 spectrum;
      o Determining (124) a standardised order-1 spectrum by applying spectral standardisation to the corrected order-1 spectrum;
      o Determining (125) a flattened order-1 spectrum by applying spectral autocorrelation to the standardised order-1 spectrum;

   - Concatenating (128) the flattened order-1 spectra, determined for each time window, to form the order-1 spectrogram.

8. The monitoring method (100) according to claim 7 further comprising, in the step (120) of determining the 1-order spectrogram, the following steps of:

   - For each time window of the plurality of time windows:

      ◦ Determining (126) a corrected flattened order-1 spectrum by applying Delta Transform to the flattened order-1 spectrum;
      ◦ Determining (127) the reduced order-1 spectrum by applying spectral standardisation to the corrected flattened order-1 spectrum;

   the concatenation step (128) being concatenating the reduced order-1 spectra, determined for each time window, to form the order-1 spectrogram.

9. The monitoring method (100) according to one of claims 6 to 8 further comprising, in the step (130) of determining the order-2 spectrogram, the following steps of:

   - For each time window of the plurality of time windows:

      ◦ Resampling (131) the vibratory signal from the speed signal to obtain an angular signal;
      ◦ Deleting (132) the deterministic part of the angular signal to obtain a corrected vibratory signal;

    ◦ Determining (133) an order-2 spectrum from a cyclic coherence of the corrected vibratory signal;
    ◦ Averaging (134) the order-2 spectrum;
    ◦ Determining (135) a flattened order-2 spectrum by applying spectral autocorrelation to the averaged order-2 spectrum;

    - Concatenating (138) the flattened order-2 spectra, determined for each time window, to form the order-2 spectrogram.

10. The monitoring method according to claim 9 method further comprising, in the step of determining (130) the order-2 spectrogram, the following steps of:

    - For each time window of the plurality of time windows:

      ◦ Determining (136) a corrected flattened order-2 spectrum by applying Delta Transform to the flattened order-2 spectrum;
      ◦ Determining (137) the reduced order-2 spectrum by applying spectral standardisation to the corrected flattened order-2 spectrum;

the concatenation step (138) being concatenating the reduced order-2 spectra, determined for each time window, to form the order-2 spectrogram.

11. Computer program product comprising instructions which, when the program is executed on a computer, cause the same to implement the steps of the method according to any of claims 1 to 10.

12. Computer-readable recording medium comprising instructions which, when executed by a computer, cause the same to implement the steps of the method according to any of claims 1 to 10.

[Fig. 1]

[Fig. 2]

[Fig. 3]

[Fig. 4]

[Fig. 5]

[Fig. 6]

[Fig. 7]

Fréquence angulaire α (Hz)

[Fig. 8]

[Fig. 9]

[Fig. 10]

[Fig. 11]

[Fig. 12]

[Fig. 13]

[Fig. 14]

[Fig. 15]

## RÉFÉRENCES CITÉES DANS LA DESCRIPTION

**Documents brevets cités dans la description**

- FR 2952177 B1
- FR 3076348 B1
- EP 2496921 A1
- US 2012272736 A1

**Littérature non-brevet citée dans la description**

- **ANTONI, R.B. RANDALL**. Frequency-Domain Self-Adaptive Noise Cancellation. *Unsupervised noise cancellation for vibration signals: part II-a novel frequency-domain algorithm, Mechanical Systems and Signal Processing,*, 2004, vol. 18 (1), 103-11